# EUROPEAN PATENT APPLICATION

(11) **EP 4 621 624 A1**
(43) Date of publication of application: **24.09.2025**
(21) Application number: 22965836.4
(22) Date of filing: 17.11.2022
(51) Int. Cl.: G06F 21/62

(54) **COORDINATION PROVISION DEVICE, DATA DISTRIBUTION PROVISION DEVICE, AND COORDINATION PROVISION METHOD**

(71) Applicant: NIPPON TELEGRAPH AND TELEPHONE CORPORATION, Chiyoda-ku, Tokyo 100-8116 (JP)
(72) Inventor: MITANI, Koki, Musashino-shi, Tokyo 180-8585 (JP); KASHIWAGI, Keiichiro, Musashino-shi, Tokyo 180-8585 (JP); UMAKOSHI, Kenji, Musashino-shi, Tokyo 180-8585 (JP); SUGIURA, Ryosuke, Musashino-shi, Tokyo 180-8585 (JP); MATSUNAGA, Hiroyuki, Musashino-shi, Tokyo 180-8585 (JP)
(74) Representative: Hoffmann Eitle
(86) International application number: PCT/JP2022/042748
(87) International publication number: WO 2024/105860

(57) **Abstract**

A coordination provision device 30 includes a first connection unit 31 connected to a data distribution platform 100 to form a policy agreement between users A and B, a second connection unit 32 connected to a data distribution platform 200 to form a policy agreement between users C and D as the users A and B, and a conversion unit 33 that converts messages transmitted and received between the first connection unit 31 and the second connection unit 32 into a format of the data distribution platform which is a transmission destination and transfers the messages. In a case where the user B uses data of the user C, the second connection unit 32 acquires the data of the user C in accordance with a policy, and the first connection unit 31 stores the data of the user C in a database 140 for B coordination provided in the data distribution platform 100 and provides the data of the user C to the user B in accordance with the policy in the data distribution platform 100. In a case where the user D uses the data of the user A, in response to a request according to the policy from the user D to the second connection unit 32, the first connection unit 31 acquires the data of the user A from the data distribution platform 100 in accordance with the policy, and the second connection unit 32 provides the data of the user A to the user D.

## Description

### [Technical Field]

The present invention relates to a linkage providing apparatus, a data distribution providing apparatus, and a linkage providing method.

### [Background Art]

In recent years, a variety of data has been collected with the spread of network services and the Internet of Things (IoT). By sharing and analyzing data collected by different companies, it is possible to make effective use of the data. As a technique for promoting data sharing between companies, there is provided a data distribution platform that shares data safely while securing data sovereignty. Data sovereignty means the right of data owners to control and manage their own data and to be subject to the laws and governance in the country in which the data is collected. A few to tens of thousands of companies or more are likely to be connected to a data distribution platform.

A data distribution platform of NPL 1 holds user data and manages access thereto, and can share data on the data distribution platform when an agreement to share data between users is formed.

A data distribution platform of NPL 2 guarantees an agreement between users without storing user data. When an agreement is formed between users, data is shared between the users in accordance with the agreement.

### [Citation List]

### [Non Patent Literature]

[NPL 1] "Features of Smart Data Platform - Smart Data Platform Knowledge Center", NTT Communications Corporation, the Internet <URL:https://sdpf.ntt.com/feature/>
[NPL 2] "IDS Reference Architecture Model 3.0", International Data Spaces Association,
https://internationaldataspaces.org/wp-content/uploads/IDS-Reference-Architecture-Model-3.0-2019.pdf

### [Summary of Invention]

### [Technical Problem]

In a case where data is shared between users of different data distribution platforms, any user may be considered to connect to the other data distribution platform. However, in order for each company to individually make its system compatible with a different data distribution platform, they would need to make significant modifications to the system or become familiar with a different data distribution platform. Users have a desire to use data by agreeing on a data sharing policy on data distribution platforms to which they are connected.

In addition, between different data distribution platforms, a policy proposed by one data distribution platform may not be in a format that can be proposed in the same format to the other data distribution platform, and thus it may be impossible to form a policy agreement.

Further, the data distribution platform of NPL 1 keeps user data, whereas the data distribution platform of NPL 2 does not keep user data, leading to a problem that the handling of data is different.

The present invention was contrived in view of the above points, and an object thereof is to share data between different data distribution platforms.

### [Solution to Problem]

According to an aspect of the present invention, there is provided a coordination provision device for coordinating a first data distribution platform and second data distribution platform to provide data sharing between a first user of the first data distribution platform and a second user of the second data distribution platform, the coordination provision device including: a first connection unit that forms an agreement on a first sharing condition with the first user in the first data distribution platform; and a second connection unit that forms an agreement on a second sharing condition with the second user in the second data distribution platform, wherein the first sharing condition and the second sharing condition are agreed upon to form an agreement on sharing conditions through the coordination provision device between the first user and the second user, and sharing conditions agreed upon between a user who uses data and the coordination provision device are the same as or more restricted than sharing conditions agreed upon between a user who provides data and the coordination provision device.

According to an aspect of the present invention, there is provided a coordination provision method of coordinating a first data distribution platform and a second data distribution platform to provide data sharing between a first user of the first data distribution platform and a second user of the second data distribution platform, the method including: using a coordination provision device, a step of forming an agreement on a first sharing condition with the first user in the first data distribution platform; and a step of forming an agreement on a second sharing condition with the second user in the second data distribution platform, wherein the first sharing condition and the second sharing condition are agreed upon to form an agreement on sharing conditions through the coordination provision device between the first user and the second user, and sharing conditions agreed upon between a user who uses data and the coordination provision device are the same as or more restricted than sharing conditions agreed upon between a user who provides data and the coordination provision device.

### [Advantageous Effects of Invention]

According to the present invention, it is possible to share data between different data distribution platforms.

### [Brief Description of Drawings]

[Fig. 1] Fig. 1 is a diagram illustrating a first data distribution platform.
[Fig. 2] Fig. 2 is a diagram illustrating a second data distribution platform.
[Fig. 3] Fig. 3 is a diagram illustrating an example in which a user of the first data distribution platform uses data of a user of the second data distribution platform.
[Fig. 4] Fig. 4 is a diagram illustrating an example of a policy correspondence table.
[Fig. 5] Fig. 5 is a sequence diagram illustrating an example of processing of agreeing on a data sharing policy between the user of the first data distribution platform and the user of the second data distribution platform.
[Fig. 6] Fig. 6 is a sequence diagram illustrating an example of processing in which the user of the first data distribution platform uses data of the user of the second data distribution platform.
[Fig. 7] Fig. 7 is a sequence diagram illustrating an example of processing in which the user of the first data distribution platform uses data of the user of the second data distribution platform.
[Fig. 8] Fig. 8 is a diagram illustrating an example in which the user of the second data distribution platform uses data of the user of the first data distribution platform.
[Fig. 9] Fig. 9 is a sequence diagram illustrating an example of processing of agreeing on a data sharing policy between the user of the first data distribution platform and the user of the second data distribution platform.
[Fig. 10] Fig. 10 is a sequence diagram illustrating an example of processing in which the user of the first data distribution platform uses data of the user of the second data distribution platform.
[Fig. 11] Fig. 11 is a diagram illustrating an example of a configuration of a conversion unit.
[Fig. 12] Fig. 12 is a diagram illustrating an example of a policy.
[Fig. 13] Fig. 13 is a diagram illustrating an example in which data is shared between Company E that uses the first data distribution platform and Company F that uses the second data distribution platform 200.
[Fig. 14] Fig. 14 is a diagram illustrating an example in which data is shared between users of the first data distribution platform.
[Fig. 15] Fig. 15 is a diagram illustrating an example of a policy correspondence table.
[Fig. 16] Fig. 16 is a sequence diagram illustrating an example of processing of agreeing on a data sharing policy between users of different data distribution platforms.
[Fig. 17] Fig. 17 is a sequence diagram illustrating an example of processing of sharing data between users of different data distribution platforms.
[Fig. 18] Fig. 18 is a sequence diagram illustrating an example of processing of sharing data between users of different data distribution platforms.
[Fig. 19] Fig. 19 is a diagram illustrating an example in which data is shared between users of the second data distribution platforms.
[Fig. 20] Fig. 20 is a sequence diagram illustrating an example of processing of agreeing on a data sharing policy between users of different data distribution platforms.
[Fig. 21] Fig. 21 is a sequence diagram illustrating an example of processing of sharing data between users of different data distribution platforms.
[Fig. 22] Fig. 22 is a diagram illustrating an example in which data is shared between users of the second data distribution platforms.
[Fig. 23] Fig. 23 is a sequence diagram illustrating an example of processing of sharing data between users of different data distribution platforms.
[Fig. 24] Fig. 24 is a diagram illustrating an example of a hardware configuration of a coordination provision device.

### [Description of Embodiments]

Before a coordination provision device according to an embodiment of the present invention is described, a first data distribution platform and a second data distribution platform will be described.

### [First data distribution platform]

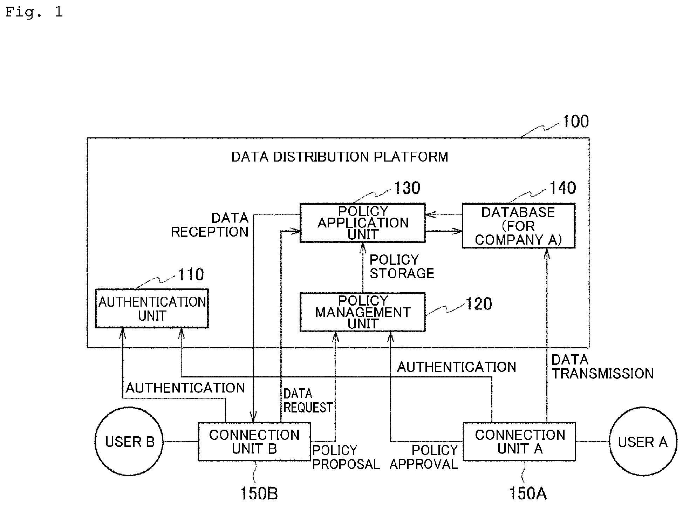

Data sharing using a first data distribution platform 100 will be described with reference to Fig. 1. The data distribution platform 100 secures a data sharing policy by storing user data and managing access to the data. The data distribution platform of NPL 1 is equivalent to the first data distribution platform 100. In the example of Fig. 1, a user B uses data of a user A through the data distribution platform 100. That is, the user A is a data provider and the user B is a data user. The user A and the user B are persons belonging to different companies or organizations. Here, it is assumed that the user A belongs to Company A and the user B belongs to Company B.

The users A and B communicate with the data distribution platform 100 using connection units 150A and 150B, respectively. For example, the connection units 150A and 150B have a function of an HTTP client, transmit requests to an HTTP server included in the data distribution platform 100, and receive responses. The connection units 150A and 150B are terminals that have an interface for users to operate and are capable of using client software for communicating with the data distribution platform 100. The connection units 150A and 150B may provide an application programming interface (API) for connection to another device. The format of messages transmitted and received by the connection units 150A and 150B to and from the data distribution platform 100 is a format according to the API of the data distribution platform 100.

The data distribution platform 100 includes an authentication unit 110, a policy management unit 120, a policy application unit 130, and a database 140.

The authentication unit 110 authenticates the connection units 150A and 150B. For authentication, for example, OpenID Connect can be used. Other authentication protocols may be used. After authentication, the connection units 150A and 150B transmit information such as a token obtained upon successful authentication in communication with other functional units of the data distribution platform 100 to demonstrate that the user is a valid user.

The database (for Company A) 140 is a database or folder path dedicated to Company A and stores data owned by the user A (Company A). The data stored in the database (for Company A) 140 can be viewed only by users who belong to Company A. The user A stores data in the database 140 using the connection unit 150A. Specifically, the connection unit 150A transmits a data transmission message to the database 140 and stores the data owned by the user A in the database 140. The data transmission message includes the data owned by the user A, a folder path for storing the data, and authority information. The authority information is, for example, a user ID indicating a person who can view data, a role ID, a group ID, and information such as readable or writable indicating the authority to use the data. When the data distribution platform 100 receives a data transmission message, the data contained in the data transmission message is stored in the database 140 dedicated to a company or organization. Meanwhile, although not shown, data of Company B is stored in the database 140 dedicated to Company B.

In a case where the user B uses data of the user A, the user B proposes a policy indicating the conditions for providing and using the data to the user A through the data distribution platform 100. When the user A approves the policy, an agreement relating to data sharing is formed between the users A and B. The user B can use the data owned by the user A in accordance with the agreed policy. The policy is a condition for providing and using data, such as, for example, a range of data that can be used, a person who can use the data, a period during which the data can be used, and operations that can be performed on the data.

When the user B proposes a policy to the user A, the connection unit 150B transmits a policy proposal message requesting sharing of data of the user A to the policy management unit 120. The policy proposal message includes a policy written in a format such as JSON. For example, the policy includes the purpose of data use, identification information of the policy proposal itself, identification information of a data provider entity (such as a company ID, a user ID, a role ID, or a group ID), identification information for data to be shared (such as a folder path in addition to a company ID, a user ID, a role ID, a group ID, and the like), a method of sharing data (such as a link method in which the data itself can be referenced, or a copy method in which the data is copied at that point in time and can be referenced), identification information of a data user entity (such as a company ID, a user ID, a role ID, or a group ID), and information on the authority to use data to be shared (read, read/write, the number of times of read/write, or a period during which read/write is possible). The policy may include other information.

The connection unit 150A transmits a request for acquiring a policy list to the policy management unit 120, and acquires the policy list as a response thereto. Meanwhile, when a new policy is proposed, the policy management unit 120 may transmit the new policy or a policy list including the new policy to the connection unit 150A. The connection unit 150A presents the policy list to the user A and accepts the user A's approval. When the user A confirms and approves the content of the policy proposed by the user B from information contained in the policy list, the connection unit 150A transmits a policy approval message to the policy management unit 120. Meanwhile, in a case where the user A does not approve the content of the policy, the connection unit 150A transmits a policy rejection message to the policy management unit 120.

When the policy approval message is received, the policy management unit 120 stores information on the approved policy in the policy application unit 130. When the policy is stored in the policy application unit 130, the user B can access data owned by the user A in accordance with the policy.

In a case where the user B uses the data after the policy agreement, the user B requests the data from the data distribution platform 100. Specifically, the connection unit 150B transmits a data request message for the data owned by the user A and stored in the database 140 to the policy application unit 130. The format of the data request message is a format according to the API of the data distribution platform 100. For example, the data request message includes identification information of the data provider entity, identification information for data to be shared, and a use method (read, read/write, etc.). The data request message may include other information.

The policy application unit 130 determines whether the content of the data request message complies with the policy held by the policy application unit 130. For example, the policy application unit 130 searches for a policy that matches the content of the data request message from among a plurality of policies it holds, and determines whether the data user entity described in the searched policy coincides with the transmission resource of the data request message and whether the request falls within the scope of the usage permissions for the data to be shared. The data request message may include a policy ID for specifying the policy.

In a case where the data request message complies with the policy, the policy application unit 130 acquires the data from the database 140 and transmits the data to the connection unit 150B.

Through the above processing, the user B can use the data owned by the user A.

Meanwhile, when a policy agreement is formed, the policy application unit 130 may copy the data to be shared from the database 140 dedicated to Company A to a database for sharing (not shown), or may place a link to the data in the database for sharing. In a case where the database for sharing is used, upon receiving a data request message, the policy application unit 130 acquires data from the database for sharing and transmits it.

### [Second data distribution platform]

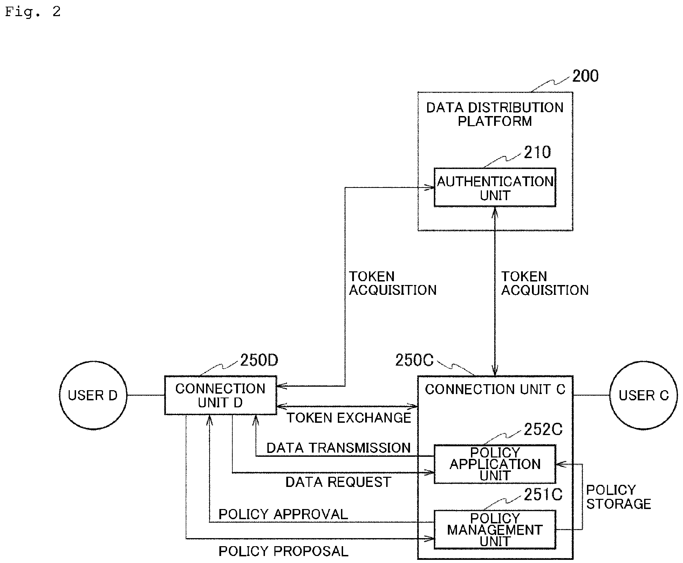

Next, data sharing using a second data distribution platform 200 will be described with reference to Fig. 2. The data distribution platform 200 provides data distribution by guaranteeing that there is an agreement on the conditions for sharing data between users, without storing user data. The data distribution platform of NPL 2 is equivalent to the second data distribution platform 200. In the example of Fig. 2, a user D uses data of a user C. That is, the user C is a data provider, and the user D is a data user. The user C and the user D are persons who belong to different companies or organizations. Here, it is assumed that the user C belongs to Company C, and the user D belongs to Company D.

The users C and D communicate with other users connected to the data distribution platform 200 using connection units 250C and 250D, respectively. For example, the connection units 250C and 250D exchange tokens for authentication between the connection units 250C and 250D to confirm each other's legitimacy, transmit requests, and receive responses, thereby forming a policy agreement and sharing data. The connection units 250C and 250D are terminals that have an interface for users to operate and are capable of using client software for communicating with other users connected to the data distribution platform 200. The connection units 250C and 250D may provide an API for connection to another device. As the connection units 250C and 250D, an International Data Spaces (IDS) connector of NPL 2 can be used. The format of messages transmitted and received between the connection units 250C and 250D is a format specified by the data distribution platform 200.

The data distribution platform 200 includes an authentication unit 210. The authentication unit 210 has a mechanism for issuing certificates such as Certificate Authority (CA) and a mechanism for issuing tokens such as Dynamic Attribute Provisioning Service (DAPS) of NPL 2. The authentication unit 210 issues information for certificate and token verification (such as the public key or certificate of the authentication unit itself) to the connection units 250C and 250D. The connection units 250C and 250D hold information for certificate and token authentication. The connection units 250C and 250D present their own certificates to the authentication unit 210 for authentication, request a token, and acquire a token for authentication. After authentication, the connection units 250C and 250D transmit the token obtained upon successful authentication in communication with the connection units of other users to demonstrate their own legitimacy. The connection units 250C and 250D verify the token received from the connection units of other users using the information for token verification, thereby confirming that the token is a valid token issued from the data distribution platform 200.

The user C registers information (metadata) relating to the data provided by the user C in the connection unit 250C. For example, the metadata includes a uniform resource identifier (URI) for acquiring data, a person who can view the data, and usage permissions such as read permission and write permission. The metadata may include other information.

In a case where the user D uses data of the user C, the user D proposes a policy indicating the conditions for providing and using the data to the user C. When the user C approves the policy, an agreement on data sharing is formed between the users C and D. The user D can use the data owned by the user C in accordance with the agreed policy.

The policy agreement is formed between the connection units 250C and 250D that have verified each other's legitimacy. The connection unit 250C on the data providing side includes a policy management unit 251C and a policy application unit 252C. The policy management unit 251C is responsible for forming policy agreement. The policy application unit 252C transmits the data in accordance with the agreed policy.

When the user D proposes a policy to the user C, the connection unit 250D transmits a policy proposal message for requesting sharing of the data of the user C to the policy management unit 251C of the connection unit 250C. The policy proposal message includes the policy indicating the conditions for providing and using the data.

The connection unit 250C acquires a policy list from the policy management unit 251C, presents the policy list to the user C, and accepts the user C's approval. Meanwhile, when a new policy is proposed, the policy management unit 251C may transmit the new policy or a policy list including the new policy to the connection unit 250C. When the user C confirms and approves the content of the policy proposed by the user D from the information contained in the policy list, the policy management unit 251C transmits a policy approval message to the connection unit 250D and stores information on the approved policy in the policy application unit 252C. When the policy is stored in the policy application unit 252C, the user D can acquire the data owned by the user C in accordance with the policy. The policy application unit 252C may hold the policy with a policy ID attached to the information on the agreed policy. As the policy ID, a resource ID indicating the data owned by the user C may be used. The policy ID may be notified to the user D. Meanwhile, in a case where the user C does not approve the content of the policy, the policy management unit 251C may transmit a policy rejection message to the connection unit 250D.

After the policy agreement, in a case where the user D uses data, the user D requests the data from the connection unit 250C. Specifically, the connection unit 250D transmits a data request message for the data owned by the user C to the policy application unit 252C of the connection unit 250C. The format of the data request message is a format specified by the data distribution platform 200. For example, the data request message is a message for requesting data which includes an agreed policy ID.

The policy application unit 252C determines whether the content of the data request message complies with the policy held by the policy application unit 252C. For example, the policy application unit 252C searches for the policy ID contained in the data request message from among a plurality of policies it holds, and determines whether the data user entity described in the searched policy matches the transmission source of the data request message, and whether the request falls within the scope of the usage permissions for the data to be shared.

In a case where the data request message complies with the policy, the policy application unit 252C requests and acquires the data owned by the user C from the connection unit 250C, and transmits the data to the connection unit 250D.

Through the above processing, the user D can use the data owned by the user C.

### [Coordination between data distribution platforms using coordination provision device]

Next, a coordination provision device according to the embodiment of the present invention will be described. In a case where data is attempted to be shared between users of different data distribution platforms, the data distribution platforms cannot communicate with each other, so they cannot, as is, exchange control messages for agreeing on data sharing conditions, nor can they share data in accordance with the agree data sharing conditions.

One possible solution would be for either user to connect to the other's data distribution platform. However, in order for each company to individually support a different data distribution platform, it will be necessary to perform these tasks for each data distribution platform, such as applying for registration to connect to each data distribution platform, deploying and operating a connection system, etc., for connection to a plurality of data distribution platforms. In addition, each data distribution platform may have different policy formats and proposal methods for data sharing, data models for transmitting and receiving data, data formats, and the like. For this reason, even with the same held data and the same data sharing conditions, each company must write data sharing conditions in a different format for each data distribution platform and convert the data into a different data format before the data can be shared using the data distribution platform to which a company that is a data sharing destination belongs.

As another solution, a method is considered in which an intermediary system that connects different data distribution platforms is deployed, allowing users to share data by exchanging control messages for agreeing on data sharing conditions with users of different data distribution platforms while remaining connected to a single data distribution platform. In order to realize this, it is considered necessary to configure an intermediary system as a system in which information on all participants in one data distribution platform is registered or connected to the system as information that can be handled by the other data distribution platform, simulating as if all users of that data distribution platform are using the other data distribution platform, and in which, even when control messages and data are transmitted and received, the control messages and data transmitted by one data distribution platform can be exchanged by converting the format into control messages and data that can be handled by the other data distribution platform. However, in this state, the intermediary system will need to manage and convert information on all users of a plurality of data distribution platforms, and be able to transmit and receive messages while mutually converting the messages. As the number of data distribution platforms to be connected to each other increases, the amount of information that has to be managed, conversion rules, and the scale of the system that implements them will increase. In this scheme, the system resources required for the intermediary system increase as the number of users increases, regardless of whether the users require interconnection or not.

In the present embodiment, a coordination provision device is provided to relay messages between the different data distribution platform 100 and the data distribution platform 200, thereby realizing data sharing between the data distribution platforms 100 and 200. Specifically, the data distribution platform 100 is expanded to include a coordination provision device that acts as the user A or the user B on the data distribution platform 200. In the data distribution platform 100, the coordination provision device acts as a counterpart of the user A or the user B (referred to as "A coordination" and "B coordination"). The A and B coordinations are registered as a separate organization different from the users A and B on the data distribution platform 100. In the data distribution platform 100, a policy agreement is formed between the coordination provision device and the users A and B, and in the data distribution platform 200, a policy agreement is formed between the coordination provision device and the users C and D. The coordination provision device coordinates the policy of the data distribution platform 100 with the policy of the data distribution platform 200 to thereby convert and relay messages transmitted and received between the data distribution platforms 100 and 200. Hereinafter, it is assumed that the users A and B are users of the data distribution platform 100 and that the users C and D are users of the data distribution platform 200. The data distribution platform 100 includes a storage means and provides data distribution by storing user data in the storage means and managing access thereto. The data distribution platform 200 provides data distribution by guaranteeing that there is an agreement on the conditions for sharing data between users without storing user data. An example in which the user B uses data of the user C and an example in which the user D uses data of the user A will be described. Meanwhile, the data distribution platforms 100 and 200 have already been described, and thus redundant description will be omitted here.

### [Example of user B using data of user C]

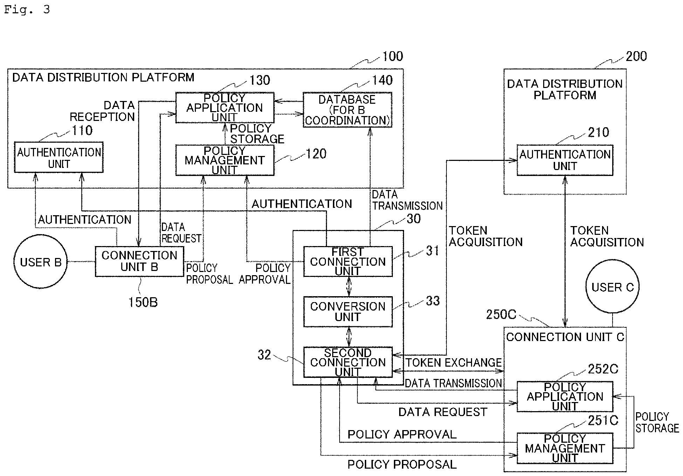

An example in which the user B of the data distribution platform 100 uses data of the user C of the data distribution platform 200 will be described with reference to Fig. 3.

A coordination provision device 30 acts as the user B with respect to the user C of the data distribution platform 200. The coordination provision device 30 agrees on a policy with the user C, requests data from the user C, and receives the data from the user C.

The coordination provision device 30 acts as B coordination that is a counterpart of the user B with respect to the user B of the data distribution platform 100. The database 140 dedicated to B coordination is located at the data distribution platform 100. A folder path dedicated to B coordination may be located. The coordination provision device 30 stores the data received from the user C of the data distribution platform 200 as B coordination in the database 140 dedicated to B coordination. The B coordination is, for example, a virtual organization for data coordination of the user B. Although the B coordination and the user B are substantially the same, the B coordination and the user B are distinguished as separate organizations on the data distribution platform 100. The database 140 dedicated to B coordination has an access right independent of the database dedicated to the user B on the data distribution platform 100. That is, the user B does not have the right to access the database 140 dedicated to B coordination. The user B can use the data of the user C stored in the database 140 in accordance with the policy agreed upon with B coordination in the data distribution platform 100. Hereinafter, the configuration of the coordination provision device 30 will be described.

The coordination provision device 30 in Fig. 3 includes a first connection unit 31, a second connection unit 32, and a conversion unit 33.

The first connection unit 31 authenticates the authentication unit 110 so as to be connectable to the data distribution platform 100, and acts as B coordination that is a counterpart of the user B in the data distribution platform 100.

When the user B and the user C agree on a policy, the first connection unit 31 detects a new policy proposal of the user B through a notification from the data distribution platform 100 or the acquisition of a policy list, and extracts a policy proposal for requesting sharing of data owned by the user C from the information contained in the policy list. The first connection unit 31 transmits the extracted policy proposal to the second connection unit 32 through the conversion unit 33, and transmits the policy approval message received from the second connection unit 32 through the conversion unit 33 to the data distribution platform 100. The first connection unit 31 transmits the policy approval message converted by the conversion unit 33 to the data distribution platform 100, whereby a policy agreement is formed between the user B and the first connection unit 31 (B coordination) in the data distribution platform 100.

In addition, the first connection unit 31 stores the data received from the user C in the database 140.

In order to be communicable with each user of the data distribution platform 200, the second connection unit 32 presents the certificate owned by the second connection unit 32 to the authentication unit 210 of the data distribution platform 200 for authentication, and requests a token to acquire a token. The second connection unit 32 and the connection unit 250C of the user C exchange tokens and confirm each other's legitimacy, thereby enabling communication with the connection unit 250C.

The second connection unit 32 transmits the policy proposal of the user B received through the conversion unit 33 to the connection unit 250C as a policy proposal message, and transmits the policy approval message of the user C received from the connection unit 250C to the first connection unit 31 through the conversion unit 33. When the user C approves the policy proposal message at the connection unit 250C, a policy agreement is formed between the second connection unit 32 and the user C in the data distribution platform 200.

The second connection unit 32 requests data from the connection unit 250C in accordance with the policy, and transmits the data received from the connection unit 250C to the first connection unit 31 through the conversion unit 33.

The conversion unit 33 converts the format of messages transmitted and received between the data distribution platform 100 and the data distribution platform 200. For example, in a case where a message is represented in a JSON format in the data distribution platform 100 and a message is represented in a proprietary format in the data distribution platform 200, the conversion unit 33 converts a message to be transferred from the data distribution platform 100 to the data distribution platform 200 from the JSON format into the proprietary format, and converts a message to be transferred from the data distribution platform 200 to the data distribution platform 100 from the proprietary format into the JSON format. In addition, in a case where terms used between the data distribution platform 100 and the data distribution platform 200 differ from each other, the conversion unit 33 converts the terms to match the transfer destination.

When the policy proposal message of the user B received from the first connection unit 31 is transmitted to the second connection unit 32, the conversion unit 33 converts the policy from the format of the data distribution platform 100 to the format of the data distribution platform 200. For example, rules for converting the policy of the data distribution platform 100 into the policy of the data distribution platform 200 are defined, and the conversion unit 33 converts the policy proposal message into the format of the data distribution platform 200 in accordance with the rules. The policy conversion is not limited to this, and the content of the policy may be interpreted using natural language processing based on AI to convert the format, or other methods may be used. In the data distribution platform 100, a policy agreement is formed between the user B and the first connection unit 31 with the policy before conversion. In the data distribution platform 200, a policy agreement is formed between the user C and the second connection unit 32 with the converted policy. Thereby, an agreement on the data sharing conditions is formed between the user B and the user C through the coordination provision device 30.

Meanwhile, the policy of the data distribution platform 100 and the policy of the data distribution platform 200 do not necessarily have to correspond one-to-one. There are a difference in the definition of words and a difference in the granularity of the conditions that can be dealt with by each of the data distribution platforms 100 and 200, and therefore it is not always possible for each of the data distribution platforms 100 and 200 to agree on exactly the same policy. In the case of the purpose of guaranteeing data sovereignty, it is necessary to observe usage of data determined by a data owner (provider) or a country or an area where the data is collected. Therefore, the policy agreed upon between the user B who uses data in the data distribution platform 100 and the coordination provision device 30 needs to be the same as or more restrictive than the policy agreed upon between the user C who provides data in the data distribution platform 200 and the coordination provision device 30. A more restrictive policy means that the extent to which data can be used under the policy agreed upon in the data distribution platform 100 on the data user side is encompassed within the extent to which data can be used under the policy agreed upon in the data distribution platform 200 on the data provider side.

For example, it is assumed that the data distribution platform 100 has a policy that "data is shared only by users who have an attribute A." It is assumed that in the data distribution platform 100, users corresponding to the attribute A are a user X and a user Y. On the other hand, it is assumed that the data distribution platform 200 has no attribute that corresponds one-to-one to the attribute A, and an attribute B can be designated by the user. It is assumed that users corresponding to the attribute B are the user X, the user Y, and a user Z. Meanwhile, the user X, the user Y, and the user Z are all users who use the data distribution platform 100. In this case, the conversion unit 33 converts the policy "data is shared only by users who have an attribute A" to "data is shared only by users who have an attribute B." Thereby, a policy that the user X, the user Y, and the user Z can use data is agreed upon in the data distribution platform 200, and a policy that the user X and the user Y can use data is agreed upon in the data distribution platform 100. As a result, the user X and the user Y can use the data, but the user Z cannot use the data. Meanwhile, the conversion unit 33 may notify a data provider of the difference between the policies before and after conversion. In the above example, when the converted policy proposal message is transmitted to the data provider of the data distribution platform 200, the conversion unit 33 may notify that a policy is applied in which only the user X and the user Y can use the data and the user Z cannot use the data in the data distribution platform 100.

As another example, it is assumed that there is a policy "sharable until 11:59:59" in the data distribution platform 100. On the other hand, it is assumed that the data distribution platform 200 does not allow a time in seconds to be designated in a policy. In this case, the conversion unit 33 converts the policy "sharable until 11:59:59" to "sharable until 12:00" by rounding up to the nearest second.

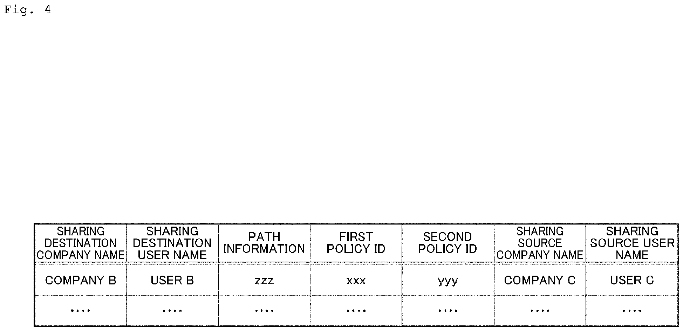

The conversion unit 33 is provided with a correspondence table that associates the policy agreed upon in the data distribution platform 100 with the policy agreed upon in the data distribution platform 200, and coordinates the policy of the data distribution platform 100 with the policy of the data distribution platform 200. Fig. 4 shows an example of a policy correspondence table. The policy correspondence table shown in the drawing includes a sharing destination company name, a sharing destination user name, path information, a first policy ID, a second policy ID, a sharing source company name, and a sharing source user name. The sharing destination company name and the sharing destination user name are the company name and user name of the data user. The sharing source company name and the sharing source user name are the company name and user name of the data provider. The path information is information indicating a location where data is stored on the data distribution platform 100, and indicates a data storage location agreed upon in the policy. The first policy ID is an ID for specifying the policy agreed upon in the data distribution platform 100. The second policy ID is an ID for specifying the policy agreed upon in the data distribution platform 200.

The data acquired from the data distribution platform 200 in accordance with the policy of the second policy ID is stored in the data distribution platform 100 in accordance with the policy of the first policy ID corresponding to the second policy ID. For example, in a case where data is acquired from the user C of the data distribution platform 200 in accordance with a policy, the conversion unit 33 searches for the policy in the correspondence table, converts the data transmission message so as to store the data in the location indicated by path information of the searched record, and transfers the data transmission message to the first connection unit 31.

In a case where the data owned by the user C is periodically added or updated, the conversion unit 33 may periodically request the data from the second connection unit 32 and transfer the acquired data to the first connection unit 31.

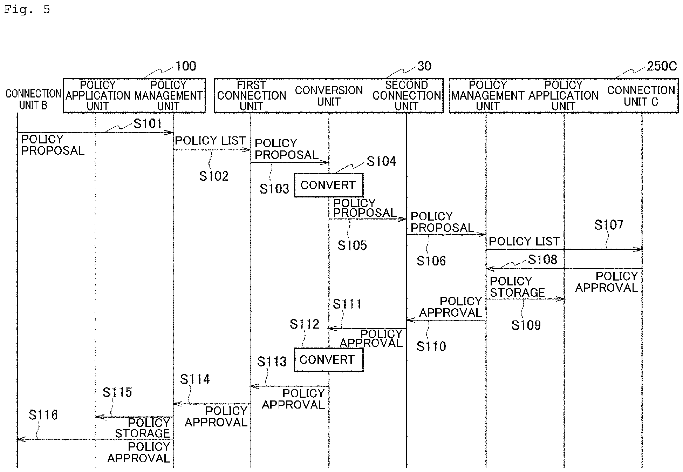

Next, an example of processing of forming a policy agreement will be described with reference to the sequence diagram of Fig. 5. The connection unit 150B and the first connection unit 31 of the user B have been authenticated by the data distribution platform 100. The connection unit 250C and the second connection unit 32 of the user C have exchanges tokens acquired from the data distribution platform 200 and have authenticated each other.

In step S101, the connection unit 150B transmits a policy proposal message for requesting sharing of the data owned by the user C to the policy management unit 120. The policy proposal message is written in the format of the data distribution platform 100.

In step S102, the first connection unit 31 acquires a policy list from the policy management unit 120, extracts a policy proposal message for requesting sharing of the data owned by the user C from information contained in the policy list in step S103, and transmits the extracted policy proposal message to the conversion unit 33.

In step S104, the conversion unit 33 converts the received policy proposal message from the format of the data distribution platform 100 to the format of the data distribution platform 200, and transmits the converted policy proposal message to the second connection unit 32 in step S105. The conversion unit 33 may convert the content of the policy so as to compatible with the data distribution platform 200.

In step S106, the second connection unit 32 transmits the policy proposal message to the policy management unit 251C of the connection unit 250C. The policy management unit 251C holds the policy proposal message.

In step S107, the connection unit 250C acquires a policy list from the policy management unit 251C. The user C confirms the policy proposal for the user C included in the policy list.

When the user C approves the policy, in step S108, the connection unit 250C transmits a policy approval message to the policy management unit 251C.

When the policy approval message is received, the policy management unit 251C stores the approved policy in the policy application unit 252C in step S109, and transmits the policy approval message to the second connection unit 32 in step S110.

In step S111, the second connection unit 32 transmits the policy approval message to the conversion unit 33.

The conversion unit 33 converts the received policy approval message from the format of the data distribution platform 200 to the format of the data distribution platform 100 in step S112, and transmits the converted policy approval message to the first connection unit 31 in step S113. The conversion unit 33 may convert the content of the policy approval message so as to compatible with the data distribution platform 100.

In step S114, the first connection unit 31 transmits the policy approval message to the policy management unit 120.

When the policy approval message is received, the policy management unit 120 stores the approved policy in the policy application unit 130 in step S115, and notifies the connection unit 150B that the policy has been approved in step S116.

When the policies are agreed upon in the data distribution platform 100 and the data distribution platform 200, the conversion unit 33 records the correspondence between the policy agreed upon in the data distribution platform 100 and the policy agreed upon in the data distribution platform 200 in the policy correspondence table.

Meanwhile, since the user B and the first connection unit 31 (B coordination) are substantially the same person, the processes of steps S101 to S103 may not be performed, and the user B may operate the coordination provision device 30, input a policy to the coordination provision device 30, and set a policy for sharing data between the user B and the B coordination. As processes equivalent to the processes of forming a policy agreement in steps S113 to S115, the first connection unit 31 on the data provider side sets a policy for sharing data of B coordination to the user B with respect to the data distribution platform 100. When the user B inputs a policy to the coordination provision device 30, in step S104, the conversion unit 33 converts the input policy into the format of the data distribution platform 200 and transmits it to the data distribution platform 200. That is, when the user B inputs a policy into the coordination provision device 30, the coordination provision device 30 sets a policy between the user B and the B coordination in the data distribution platform 100, and transmits a policy proposal message corresponding to the input policy to the data distribution platform 200.

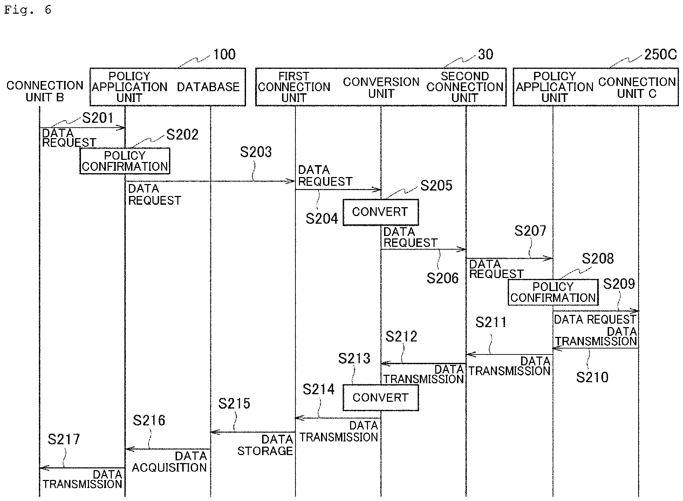

Next, an example of processing in which the user B uses the data owned by the user C will be described with reference to the sequence diagram of Fig. 6.

In step S201, the connection unit 150B transmits a data request message for the data of the user C to the policy application unit 130. The data request message may be a data request message for data managed by the B coordination.

In step S202, the policy application unit 130 confirms whether the content of the data request message complies with the policy. Specifically, the policy application unit 130 searches for a policy that matches the content of the data request message from among a plurality of policies it holds. In a case where there is a matching policy, the policy application unit 130 confirms whether the user B is included in the entity that will receive data sharing described in the policy, and further confirms whether the content of usage of data included in the data request message falls within the scope of the usage permissions for the data.

In a case where the content of the data request message complies with the policy, in step S203, the policy application unit 130 transmits the data request message to the first connection unit 31. In a case where the requested data is stored in the database 140, the policy application unit 130 may acquire the data from the database 140.

In step S204, the first connection unit 31 transmits the data request message to the conversion unit 33.

In step S205, the conversion unit 33 converts the data request message from the format of the data distribution platform 100 to the format of the data distribution platform 200. For example, the conversion unit 33 refers to the policy correspondence table, acquires a resource ID corresponding to the folder path designated in the received data request message, and converts the data request message into a data request message for the acquired resource ID.

In step S206, the conversion unit 33 transmits the converted data request message to the second connection unit 32.

In step S207, the second connection unit 32 transmits a data request message to the policy application unit 252C.

In step S208, the policy application unit 252C confirms whether the content of the data request message complies with the policy.

In a case where the content of the data request message complies with the policy, in step S209, the policy application unit 252C requests data from the connection unit 250C.

In step S210, the connection unit 250C acquires the data from the data storage location, and transmits the data to the policy application unit 252C. The data may be transmitted inclusive in the data transmission message.

In step S211, the policy application unit 252C transmits the data to the second connection unit 32, and in step S212, the second connection unit 32 transmits the data to the conversion unit 33.

In step S213, the conversion unit 33 converts the data from the format of the data distribution platform 200 to the format of the data distribution platform 100. For example, the conversion unit 33 refers to the policy correspondence table, acquires the folder path of the storage destination of the received data, and converts the data transmission message into data transmission for the acquired folder path.

In step S214, the conversion unit 33 transmits the data to the first connection unit 31.

In step S215, the first connection unit 31 stores the data in the database 140. The first connection unit 31 may notify the policy application unit 130 that the data has been stored. Alternatively, the first connection unit 31 may transmit the data to the policy application unit 130 as a response to the data request message in step S203.

In step S216, the policy application unit 130 acquires data from the database 140 and transmits the data to the connection unit 150B in step S217.

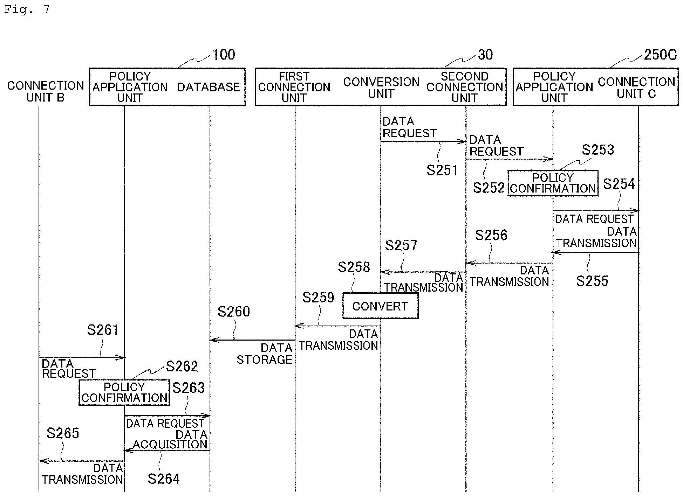

Next, an example of another processing in which the user B uses the data owned by the user C will be described with reference to the sequence diagram of Fig. 7. In the processing of Fig. 6, data is acquired from the user C in response to a request from the user B, but in the processing of Fig. 7, after a policy agreement, the data owned by the user C is stored in advance in the database 140 of the data distribution platform 100.

In step S251, the conversion unit 33 transmits a data request message for the data of the user C to the second connection unit 32. For example, for the data of the user C which is periodically added, the conversion unit 33 transmits the data request message in accordance with the timing of data addition.

In step S252, the second connection unit 32 transmits the data request message to the policy application unit 252C.

In step S253, the policy application unit 252C confirms whether the content of the data request message complies with the policy.

In a case where the content of the data request message complies with the policy, in step S254, the policy application unit 252C requests data from the connection unit 250C.

In step S255, the connection unit 250C acquires the data from the data storage location, and transmits the data to the policy application unit 252C. The data may be transmitted inclusive in the data transmission message.

In step S256, the policy application unit 252C transmits the data to the second connection unit 32, and in step S257, the second connection unit 32 transmits the data to the conversion unit 33.

In step S258, the conversion unit 33 converts the data from the format of the data distribution platform 200 to the format of the data distribution platform 100. For example, the conversion unit 33 refers to the policy correspondence table, acquires the folder path of the storage destination of the received data, and converts the data transmission message into data transmission for the acquired folder path.

In step S259, the conversion unit 33 transmits the data to the first connection unit 31.

In step S260, the first connection unit 31 stores the data in the database 140.

Through the above processing, the data of the user C agreed upon in the policy is stored in the database 140 of the data distribution platform 100, and the user B can use the data of the user C in accordance with the policy.

In a case where the user B uses the data of the user C, in step S261, the connection unit 150B transmits a data request message for the data of the user C owned by the B coordination to the policy application unit 130.

In step S262, the policy application unit 130 confirms whether the content of the data request message complies with the policy.

In a case where the content of the data request message complies with the policy, the policy application unit 130 requests the data from the database 140 in step S263, acquires the data from the database 140 in step S264, and transmits the data to the connection unit 150B in step S265.

### [Example of user D using data of user A]

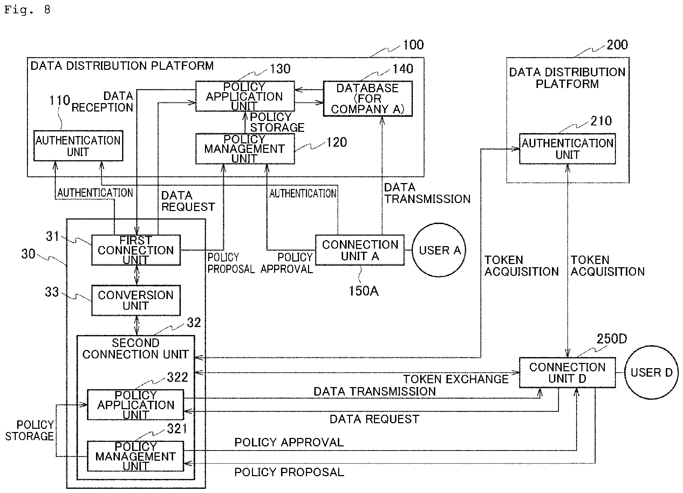

Next, an example in which the user D of the data distribution platform 200 uses the data of the user A in the data distribution platform 100 will be described with reference to Fig. 8. The coordination provision device 30 acts as the user A with respect to the user D of the data distribution platform 200. The coordination provision device 30 applies a policy between the coordination provision device 30 and the user D, and transmits data in response to a data request from the user D. The coordination provision device 30 acts as A coordination that is a counterpart of the user A with respect to the user A of the data distribution platform 100. The coordination provision device 30 applies a policy between the coordination provision device 30 and the user A, and acquires data requested by the user D from the data distribution platform 100. Hereinafter, the configuration of the coordination provision device 30 will be described.

The coordination provision device 30 in Fig. 8 includes the first connection unit 31, the second connection unit 32, and the conversion unit 33, similarly to the coordination provision device 30 in Fig. 3.

The first connection unit 31 authenticates the authentication unit 110 so as to be connectable to the data distribution platform 100, and acts as A coordination that is a counterpart of the user A in the data distribution platform 100.

The first connection unit 31 receives the policy proposal message of the user D through the conversion unit 33 and transmits it to the data distribution platform 100. When the user A approves the policy, a policy agreement is formed between the user A and the first connection unit 31 (A coordination) in the data distribution platform 100.

In response to a request from the user D, the first connection unit 31 acquires the data of the user A stored in the database 140 in accordance with the policy, and transmits it to the user D through the conversion unit 33 and the second connection unit 32.

In order to be communicable with each user of the data distribution platform 200, the second connection unit 32 presents the certificate owned by the second connection unit 32 to the authentication unit 210 of the data distribution platform 200 for authentication, and requests a token to acquire a token. The second connection unit 32 and the connection unit 250D of the user D exchange tokens and confirm each other's legitimacy, thereby enabling communication with the connection unit 250D.

The second connection unit 32 includes a policy management unit 321 and a policy application unit 322. The policy management unit 321 forms a policy agreement with the user D as the user A in the data distribution platform 200. The policy application unit 322 transmits the data of the user A in accordance with the policy agreed upon in the data distribution platform 200. The data of the user A is acquired from the data distribution platform 100.

The policy management unit 321 receives and holds the policy proposal message of the user D. The second connection unit 32 transmits the policy proposal message of the user D held by the policy management unit 321 to the data distribution platform 100 through the conversion unit 33 and the first connection unit 31. When the policy proposal of the user D is approved, the policy management unit 321 stores the approved policy in the policy application unit 322.

The policy application unit 322 receives a data request message from the user D, and determines whether the content of the data request message complies with the policy held by the policy application unit 322. In a case where the data request message complies with the policy, the policy application unit 322 transmits the data request message to the conversion unit 33, acquires the data from the data distribution platform 100, and transmits the data to the connection unit 250D.

When the policy proposal message of the user D received from the second connection unit 32 is transmitted to the first connection unit 31, the conversion unit 33 converts the policy from the format of the data distribution platform 200 to the format of the data distribution platform 100. The conversion unit 33 converts the policy so that the policy agreed upon between the user D who uses the data and the second connection unit 32 is the same as or more restrictive than the policy agreed upon between the user A who provides the data and the first connection unit 31. The conversion method and conversion content are the same as those of the conversion unit 33 in Fig. 3, and thus a description thereof will be omitted here.

When the data request message is received from the second connection unit 32, the conversion unit 33 converts the data request message into the format of the data distribution platform 100 and transmits it to the first connection unit 31. For example, in a case where the data request message complying with a policy is received from the user D of the data distribution platform 200, the conversion unit 33 searches for the policy in the correspondence table, converts the data request message so as to acquire the data from the location indicated by path information of the searched record, and transmits the converted data request message to the first connection unit 31.

When data is received from the first connection unit 31, the conversion unit 33 transmits the received data to the second connection unit 32.

Other functions of the conversion unit 33 are the same as those of the conversion unit 33 in Fig. 3, and thus redundant description will be omitted.

The coordination provision device 30 in Fig. 3 and the coordination provision device 30 in Fig. 8 are basically the same as each other. The coordination provision devices 30 in Figs. 3 and 8 may have mutual functions and be able to share data bidirectionally between the data distribution platform 100 and the data distribution platform 200.

Next, an example of a flow of processing in which a data sharing policy is agreed upon between the user A and the user D and the user D uses the data owned by the user A will be described. The connection unit 150A and the first connection unit 31 of the user A have been authenticated by the data distribution platform 100. The connection unit 250D and the second connection unit 32 of the user D have exchanged tokens acquired from the data distribution platform 200 and have authenticated each other.

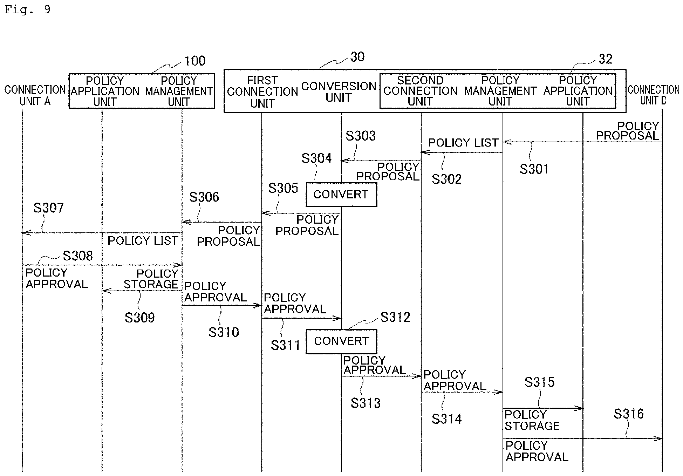

An example of processing of forming a policy agreement will be described with reference to the sequence diagram of Fig. 9.

In step S301, the connection unit 250D transmits a policy proposal message for requesting sharing of the data owned by the user A to the policy management unit 321 of the second connection unit 32. The policy management unit 321 holds the policy proposal message. The policy proposal message is written in the format of the data distribution platform 200.

In step S302, the second connection unit 32 acquires a policy list from the policy management unit 321, extracts the policy proposal message for requesting sharing of the data owned by the user A from the information contained in the policy list in step S303, and transmits the extracted policy proposal message to the conversion unit 33.

In step S304, the conversion unit 33 converts the received policy proposal message from the format of the data distribution platform 200 to the format of the data distribution platform 100, and transmits the converted policy proposal message to the first connection unit 31 in step S305. The conversion unit 33 may convert the content of the policy so as to compatible with the data distribution platform 100.

In step S306, the first connection unit 31 transmits the policy proposal message to the policy management unit 120 of the data distribution platform 100. The policy management unit 120 holds the policy proposal message.

In step S307, the connection unit 150A acquires a policy list from the policy management unit 120. The user A confirms the policy proposal for the user A included in the policy list.

When the user A approves the policy, the connection unit 150A transmits a policy approval message to the policy management unit 120 in step S308.

When the policy approval message is received, the policy management unit 120 stores the approved policy in the policy application unit 130 in step S309, and transmits the policy approval message to the first connection unit 31 in step S310.

In step S311, the first connection unit 31 transmits the policy approval message to the conversion unit 33.

The conversion unit 33 converts the received policy approval message from the format of the data distribution platform 100 to the format of the data distribution platform 200 in step S312, and transmits the converted policy approval message to the second connection unit 32 in step S313. The conversion unit 33 may convert the content of the policy approval message so as to compatible with the data distribution platform 200.

In step S314, the second connection unit 31 transmits the policy approval message to the policy management unit 321.

When the policy approval message is received, the policy management unit 321 stores the approved policy in the policy application unit 130 in step S315, and notifies the connection unit 250D that the policy has been approved in step S316.

When the policy is agreed upon in each of the data distribution platform 100 and the data distribution platform 200, the conversion unit 33 records the correspondence between the ID of the policy agreed upon in the data distribution platform 100 and the ID of the policy agreed upon in the data distribution platform 200 in a policy correspondence table.

Meanwhile, since the user A and the first connection unit 31 (A coordination) are substantially the same person, the processes of steps S306 and S307 are not performed. Instead, the user A may confirm the policy proposal message of the user D in the coordination provision device 30, and as a process equivalent to step S308, the connection unit 150A on the data provider side may set a policy for sharing data between the user A and the A coordination in the data distribution platform 100.

In addition, in a case where the user A and the user D have reached an agreement on data sharing outside the system, the user A may operate the coordination provision device 30 to input a policy into the coordination provision device 30, and a policy agreement may be formed between the data distribution platform 100 and the data distribution platform 200. For example, without performing the processes of steps S301 to S307, the user A who is a data provider inputs a policy into the coordination provision device 30, and the conversion unit 33 converts the input policy into the format of the data distribution platform 200 in step S312 and stores it in the policy application unit 322 of the second connection unit 32 in steps S313 to S315. Further, in step S308, the connection unit 150A sets a policy for sharing data between the user A and the A coordination in the data distribution platform 100. That is, when the user A inputs a policy into the coordination provision device 30, the coordination provision device 30 sets the policy between the user A and the A coordination in the data distribution platform 100, and also sets the input policy in the second connection unit 32.

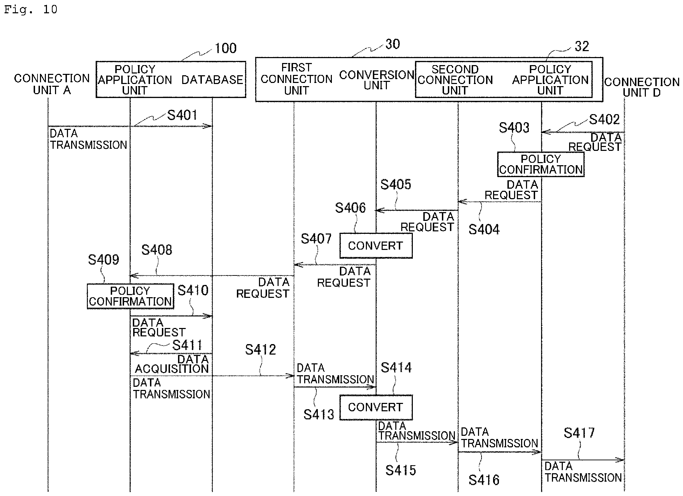

Next, an example of processing in which the user D uses the data owned by the user A will be described with reference to the sequence diagram of Fig. 10.

In step S401, the connection unit 150A transmits data to the database 140 and stores it.

In step S402, the connection unit 250D transmits a data request message for the data of the user A to the policy application unit 322.

In step S403, the policy application unit 322 confirms whether the content of the data request message complies with the policy.

In a case where the content of the data request message complies with the policy, the policy application unit 322 transmits the data request message to the second connection unit 32 in step S404, and the second connection unit 32 transmits the data request message to the conversion unit 33 in step S405.

In step S406, the conversion unit 33 converts the data request message from the format of the data distribution platform 200 to the format of the data distribution platform 100. For example, the conversion unit 33 refers to the policy correspondence table, acquires path information on the data distribution platform 100 corresponding to the resource ID designated in the received data request message, and converts the data request message into a data request message for the data indicated by the path information.

In step S407, the conversion unit 33 transmits the converted data request message to the first connection unit 31.

In step S408, the first connection unit 31 transmits the data request message for the data owned by the user A in the database 140 to the policy application unit 130.

In step S409, the policy application unit 130 confirms whether the content of the data request message complies with the policy.

In a case where the content of the data request message complies with the policy, the policy application unit 130 requests the data from the database 140 in step S410, and acquires the data from the database 140 in step S411.

In step S412, the policy application unit 130 transmits the data to the first connection unit 31, and in step S413, the first connection unit 31 transmits the data to the conversion unit 33.

In step S414, the conversion unit 33 converts the data from the format of the data distribution platform 100 to the format of the data distribution platform 200. For example, the conversion unit 33 includes the data in a response to the data request message.

In step S415, the conversion unit 33 transmits the data to the second connection unit 32.

In step S416, the second connection unit 32 transmits the data to the policy application unit 322, and in step S417, the policy application unit 322 transmits the data to the connection unit 250D.

### [Conversion unit]

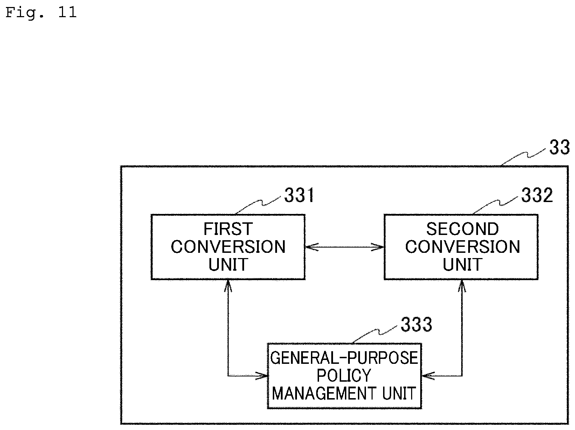

An example of the configuration of the conversion unit 33 will be described with reference to Fig. 11. The conversion unit 33 shown in the drawing includes a first conversion unit 331, a second conversion unit 332, and a general-purpose policy management unit 333.

The first conversion unit 331 is connected to the first connection unit 31, and converts information of the data distribution platform 100 received from the first connection unit 31 into general-purpose information and transmits it to the second conversion unit 332, or converts the general-purpose information received from the second conversion unit 332 into the information of the data distribution platform 100 and transmits it to the first connection unit 31.

The second conversion unit 332 is connected to the second connection unit 32, and converts information of the data distribution platform 200 received from the second connection unit 32 into general-purpose information and transmits it to the first conversion unit 331, or converts the general-purpose information received from the first conversion unit 331 into the information of the data distribution platform 200 and transmits it to the second connection unit 32.

The general-purpose policy management unit 333 holds, for example, ontologies for various industries. The first conversion unit 331 and the second conversion unit 332 refer to the general-purpose policy management unit 333 and convert the information of the data distribution platforms 100 and 200 into general-purpose information or convert the general-purpose information into the information of the data distribution platforms 100 and 200.

### [Policy variation]

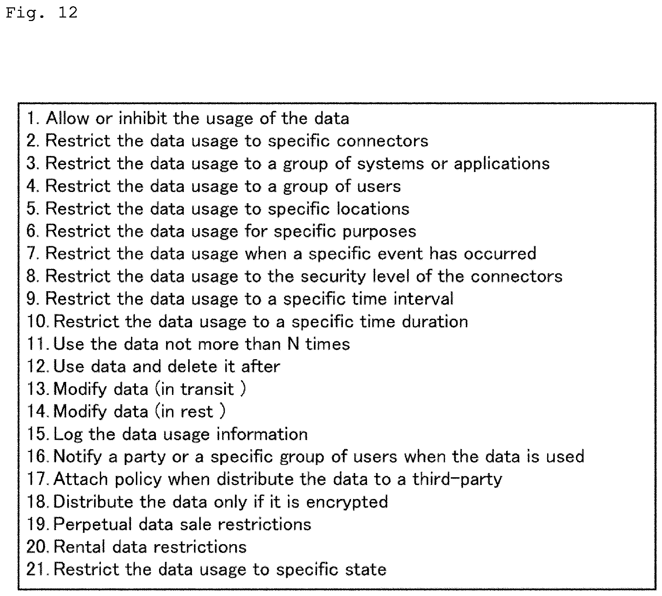

An example of a policy will be described with reference to Fig. 12. The policy may designate a policy as shown in the example of Fig. 12 in addition to designating the data to be shared or designating the user of the data.

The first policy is a policy that allows or prohibits a method of using data. This policy designates actions desired to be allowed or prohibited as a method of using data. For example, a policy in which display is allowed and printing is prohibited is designated.

The second to tenth policies are policies for restricting data use to a specific condition. For example, these policies designate restrictions on connectors, systems, users, locations, or times for which data can be used, and restrictions on the purposes of using the data.

The eleventh policy is a policy for designating the number of times data can be used.

The twelfth policy is a policy for requesting deletion of data after the data has been used.

The thirteenth and fourteenth policies are policies for requesting correction of data. For example, in these policies, the use of data is allowed after some of the data has been anonymized.

The fifteenth and sixteenth policies are policies regarding recording or notification of data use. These policies request to log during data use or request to notify a specific user during data use.

The seventeenth and eighteenth policies are policies regarding data distribution. For example, these policies can additionally designate a policy on a data use method when data is distributed to a third party or allow only encrypted data to be distributed.

The nineteenth and twentieth policies are policies regarding the payment of fees for data use. These policies designate a one-time or monthly fee.

The twenty-first policy is a policy regarding data usage status. For example, this policy can allow data to be used only when the environment in which the data is used in a specific state.

Since policy stipulations differ for each of the data distribution platforms 100 and 200, the conversion unit 33 converts the message when a policy proposal message or a policy approval message is converted in accordance with the policy stipulations of the data distribution platforms 100 and 200 which are transmission destinations. In a case where there is no policy corresponding to the data distribution platforms 100 and 200 which are transmission destinations, it may be converted to a close policy.

### [Automating policy formation]

The policy agreement may be configured not to wait for approval from the data provider. For example, the data provider publishes acceptable policies when data is provided. A data user who desires to use the data can set a policy without the approval of the data provider by transmitting a policy proposal message for the published policy.

For example, a list of policies that have been published in the coordination provision device 30 is held. The user accesses the coordination provision device 30 and selects a policy he or she desires to use. When a policy is selected, the coordination provision device 30 sets a policy in each of the data distribution platform 100 and the data distribution platform 200 in accordance with the policy, and coordinates the policies.

Specifically, in a case where the user C of the data distribution platform 200 provides data and a policy is published in the coordination provision device 30, the user B of the data distribution platform 100 accesses the coordination provision device 30 and selects the policy. When a policy is selected, the coordination provision device 30 creates B coordination in the data distribution platform 100, sets the policy between the user B and the B coordination on the data distribution platform 100, transmits a policy request message in the format of the data distribution platform 200 complying with the selected policy to the connection unit 250C of the user C, and sets the policy between the coordination provision device 30 and the connection unit 250C on the data distribution platform 200. In the case of a published policy, the policy is set without waiting for approval from the user C. The coordination provision device 30 coordinates policies between the data distribution platform 100 and the data distribution platform 200, so that the user B will be able to use the data of the user C.

In addition, in a case where the user A of the data distribution platform 100 provides data and publishes a policy, the coordination provision device 30 creates A coordination in the data distribution platform 100, sets the policy between the user A and the A coordination on the data distribution platform 100, and distributes metadata of the data of the user A on the data distribution platform 200. The metadata includes data sharing policies, information on a data request destination, and the like. The second connection unit 32 of the coordination provision device 30 is designated as the data request destination. When the user D of the data distribution platform 200 uses the data of the user A, the connection unit 250D transmits a policy request message to the second connection unit 32 of the coordination provision device 30, and sets the policy between the coordination provision device 30 and the connection unit 250D on the data distribution platform 200. In the case of a published policy, the policy is set without waiting for approval from the user A. The coordination provision device 30 coordinates policies between the data distribution platform 100 and the data distribution platform 200, so that the user D will be able to use the data of the user A.

### [Example 1]

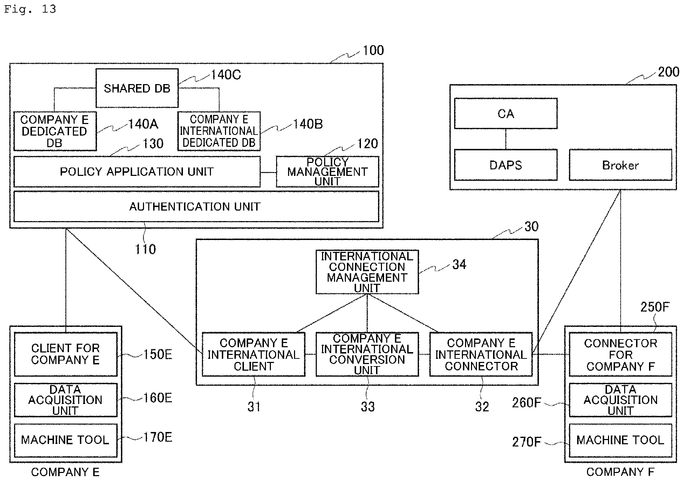

Reference will be made to Fig. 13 to describe an example in which data is shared between Company E that uses the first data distribution platform 100 and Company F that uses the second data distribution platform 200.

Company E manufactures a product using parts manufactured by Company F. Company E desires to use the amount of CO₂ emission required for Company F to manufacture a part in order to calculate the total amount of CO₂ emission required for the product. That is, Company E desires to use data of Company F. Company E uses the data distribution platform 100, and Company F uses the data distribution platform 200. Consequently, the coordination provision device 30 of the present embodiment is used to share the data of Company F in the data distribution platform 200 with Company E of the data distribution platform 100.

The amount of CO₂ emission of a machine tool 170E of Company E is acquired by a data acquisition unit 160E. For example, an OPC UA Server is connected to the machine tool 170E, and the data acquisition unit 160E is provided with an OPC UA Client to acquire data of the machine tool 170E. A client 150E for Company E stores the acquired data in a database 140A dedicated to Company E of the data distribution platform 100. The client 150E for Company E is client software for connection to the data distribution platform 100.

The amount of CO₂ emission of a machine tool 270F of Company F is acquired by a data acquisition unit 260F. For example, an OPC UA Server is connected to the machine tool 270F, the data acquisition unit 260F is provided with an OPC UA Client, and the data acquisition unit 260F acquires data of the machine tool 270F. A connector 250F for Company F is an IDS connector that can be connected to the data space of the data distribution platform 200. Company F requests the data distribution platform 200 to issue a certificate for the connector 250F for Company F. The data distribution platform 200 uses a CA to issue a certificate for the connector 250F for Company F, registers the certificate in the DAPS, and then provides the certificate and the certificate of the DAPS itself to the connector 250F for Company F. By setting the certificate, the certificate of the DAPS itself, and the IP addresses of the DAPS and Broker in the connector 250F for Company F, the connector 250F for Company F can communicate on the data distribution platform 200. The Broker is a function for searching for the type of data provided by a data provider and the acquisition destination of the data (for example, the connector 250F for Company F).

The data distribution platform 100 includes the authentication unit 110, the policy management unit 120, the policy application unit 130, the database 140A dedicated to Company E, a Company E international dedicated database 140B, and a shared database 140C. The database 140A dedicated to Company E is a database that stores data of Company E. The Company E international dedicated database 140B is a database that stores data acquired from Company F. The shared database 140C is a database that stores data to be shared. The data of Company F is copied from the Company E international dedicated database 140B to the shared database 140C.

Company E uses an international connection management unit 34 of the coordination provision device 30 to set data sharing conditions with Company F in order to use the data of Company F on the data distribution platform 100. Specifically, Company E designates that Company F is connected to the data distribution platform 200 without using the data distribution platform 100. Company E sets path information indicating the scope of data to be shared with Company E as a data sharing condition. This path information is a location where the data of Company F is stored. Further, Company E sets an IDS connector name or IDS connector ID for searching for the connector 250F for Company F and an identifier for the data shared by Company F.

When the data sharing conditions have been set, the international connection management unit 34 newly and additionally registers an organization "Company E international" in the data distribution platform 100, deploys the Company E international client (first connection unit) 31, and sets information necessary for connection to the data distribution platform 100. In addition, the data distribution platform 100 deploys the Company E international dedicated database 140B corresponding to the path information set as the data sharing conditions. The data received from Company F is stored in the Company E international dedicated database 140B.

The international connection management unit 34 sets a policy for permitting viewing of the data of Company F stored in the Company E international dedicated database 140B in the data distribution platform 100 through the Company E international client 31. This makes it possible for the client 150E for Company E to view the data through the shared database 140C when the data of Company F is requested from the policy application unit 130. Meanwhile, since Company E and Company E international are substantially the same, Company E sets the policy between Company E and Company E international in the data distribution platform 100 using the international connection management unit 34 without transmitting a policy proposal message from the client 150E for Company E to the policy management unit 120. However, a policy may be set in the policy application unit 130 by transmitting a policy proposal message from the client 150E for Company E to the policy management unit 120 and the Company E international client 31 transmitting a policy approval message to the policy management unit 120.

When the policy setting in the data distribution platform 100 is completed, the international connection management unit 34 deploys the Company E international connector (second connection unit) 32 that can be connected to the same data space of the data distribution platform 200 as Company **F.** The international connection management unit 34 requests the data distribution platform 200 to issue a certificate for the Company E international connector 32. The data distribution platform 200 uses a CA to issue a certificate for the Company E international connector 32, registers the certificate in the DAPS, and then provides the certificate and the certificate of the DAPS itself to the Company E international connector 32. By setting the certificate, the certificate of the DAPS itself, and the IP addresses of the DAPS and Broker in the Company E international connector 32, the Company E international connector 32 can communicate on the data distribution platform 200.

When the deployment of the Company E international connector 32 is completed, a data sharing policy is agreed upon between the Company E international connector 32 and the connector 250F for Company F. The Company E international conversion unit 33 converts the data sharing conditions set by Company E with Company F into a policy proposal message in the format of the data distribution platform 200, and the Company E international connector 32 transmits the policy proposal message to the connector 250F for Company F. Meanwhile, in a case where the ID and resource ID of the connector 250F for Company F is unknown, the Company E international connector 32 inquires of the Broker of the data distribution platform 200 to acquire the ID and resource ID of the connector 250F for Company F. When the policy approval message is received from the connector 250F for Company F, the Company E international connector 32 transmits the policy approval message to the Company E international conversion unit 33.

The Company E international conversion unit 33 registers, in a policy correspondence table, the correspondence between the ID of the policy agreed upon between the Company E international connector 32 and the connector 250F for Company F and the policy agreed upon between Company E and Company E international.

When a policy is agreed upon between the Company E international connector 32 and the connector 250F for Company F, the Company E international conversion unit 33 periodically transmits a data request message to the connector 250F for Company F through the Company E international connector 32, and periodically acquires the data of Company **F.** The data request message includes the ID of the policy agreed upon between the Company E international connector 32 and the connector 250F for Company F. When the data request message complying with the policy is received, the connector 250F for Company F acquires and returns the data. The Company E international conversion unit 33 converts the acquired data of Company F, and stores the converted data of Company F in the Company E international dedicated database 140B through the Company E international client 31. For data conversion processing, conversion rules are created using a data model designated by Company E, and are set in the Company E international conversion unit 33. The Company E international conversion unit 33 searches the policy correspondence table for the ID of the policy used in the data request, and determines a path for storing the data of Company F on the basis of the path information of the data distribution platform 100 written in the policy correspondence table.

### [Example 2]

Reference will be made to Fig. 13 that is the same as in Example 1 to describe an example in which data is shared between Company E that uses the first data distribution platform 100 and Company F that uses the second data distribution platform 200.

In Example 2, Company F uses the data of Company E by changing the positions of Company E and Company F in Example 1. Company E is a data provider and Company F is a data user. Company E uses the data distribution platform 100, and Company F uses the data distribution platform 200. The coordination provision device 30 of the present embodiment is used to share the data of Company E in the data distribution platform 100 with Company F in the data distribution platform 200.

The configurations of the data distribution platform 100 and the data distribution platform 200, the client 150E for Company E of Company E, the data acquisition unit 160E, the machine tool 170E, the connector 250F for Company F of Company F, the data acquisition unit 260F, and the machine tool 270F are the same as those in Example 1, and thus a description thereof will be omitted here.

Company E uses the international connection management unit 34 of the coordination provision device 30 to set data sharing conditions with Company F in order to share the data of Company E stored in the data distribution platform 100 with Company F. Specifically, Company E designates that Company F is connected to the data distribution platform 200 without using the data distribution platform 100. Company E sets path information indicating the scope of data to be shared with Company F, a period during which data can be shared, the number of times the data can be read, and the like, as the data sharing condition. Further, Company E sets an IDS connector name or IDS connector ID for searching for the connector 250F for Company F and an identifier for the data shared by Company F.

When the data sharing conditions have been set, the international connection management unit 34 newly and additionally registers an organization "Company E international" in the data distribution platform 100, deploys the Company E international client (first connection unit) 31 so as to be connectable to the data distribution platform 100 as Company E international, and sets information necessary for connection to the data distribution platform 100.

When Company E international is added, the client 150E for Company E sets a policy in the data distribution platform 100 in order to allow Company E international to access the data of Company E in accordance with the data sharing conditions. This makes it possible for the Company E international client 31 to acquire the data of Company E through the shared database 140C when the data of Company E is requested from the policy application unit 130. Meanwhile, since Company E and Company E international are substantially the same, Company E sets the policy between Company E and Company E international in the data distribution platform 100 using the client 150E for Company E without transmitting a policy proposal message from the Company E international client 31 to the policy management unit 120. However, a policy may be set in the policy application unit 130 by transmitting a policy proposal message from the Company E international client 31 to the policy management unit 120 and the client 150E for Company E transmitting a policy approval message to the policy management unit 120.

When the policy setting in the data distribution platform 100 is completed, the international connection management unit 34 deploys the Company E international connector (second connection unit) 32 that can be connected to the same data space of the data distribution platform 200 as Company F. The international connection management unit 34 requests the data distribution platform 200 to issue a certificate for the Company E international connector 32. The data distribution platform 200 uses a CA to issue a certificate for the Company E international connector 32, registers the certificate in the DAPS, and then provides the certificate and the certificate of the DAPS itself to the Company E international connector 32. By setting the certificate, the certificate of the DAPS itself, and the IP addresses of the DAPS and Broker in the Company E international connector 32, the Company E international connector 32 can communicate on the data distribution platform 200.

When the deployment of the Company E international connector 32 is completed, a data sharing policy is agreed upon between the Company E international connector 32 and the connector 250F for Company F. The Company E international conversion unit 33 converts the data sharing conditions set by Company E with Company F into a policy proposal message in the format of the data distribution platform 200, and the Company E international connector 32 transmits the policy proposal message to the connector 250F for Company F. When the Company E international connector 32 receives the policy approval message from the connector 250F for Company F, a data sharing policy is agreed between the Company E international connector 32 and the connector 250F for Company F. The Company E international connector 32 holds the agreed policy, and acquires and transmits the requested data when a data request message complying with the policy is received. Meanwhile, the connector 250F for Company F may transmit the policy proposal message to the Company E international connector 32. In this case, an approvable policy is set in advance in the Company E international connector 32. When an approvable policy proposal message is received, the Company E international connector 32 automatically transmits the policy approval message to the connector 250F for Company F, and a data sharing policy is agreed upon between the Company E international connector 32 and the connector 250F for Company F. Alternatively, the coordination provision device 30 may transmit the policy proposal message from Company F to the data distribution platform 100, and set a policy between Company E and Company E international in the data distribution platform 100.

The Company E international conversion unit 33 registers, in a policy correspondence table, the correspondence between the ID of the policy agreed upon between the Company E international connector 32 and the connector 250F for Company F and the policy agreed upon between Company E and Company E international.

When the data request message complying with the policy is received from the connector 250F for Company F, the Company E international connector 32 transmits the data request message to the Company E international conversion unit 33. The Company E international conversion unit 33 converts the data request message into the format of the data distribution platform 100, and acquires the data of Company E from the data distribution platform 100 through a Company E international client 11. Specifically, the ID of the policy included in the data request message is searched for from policy correspondence table, the requested data is specified on the basis of the path information of the data distribution platform 100 listed in policy correspondence table, and the data of Company E is acquired from the data distribution platform 100 through the Company E international client 11.

The Company E international conversion unit 33 converts the acquired data of Company E and returns the converted data of Company E to the connector 250F for Company F through the Company E international connector 12.

As described above, the coordination provision device 30 of the present embodiment is a device that shares data between the users A and B of the first data distribution platform 100 that distributes data by storing user data in a storage means and managing access thereto and the users C and D of the second data distribution platform 200 that distributes data by guaranteeing agreement between users without storing user data. The coordination provision device 30 includes the first connection unit 31 connected to the first data distribution platform 100 to form a policy agreement between the users A and B, the second connection unit 32 connected to the second data distribution platform 200 to form a policy agreement between the users C and D as the users A and B, and the conversion unit 33 that converts messages transmitted and received between the first connection unit 31 and the second connection unit 32 into the format of the data distribution platform which is a transmission destination and transfers the messages. In a case where the user B uses the data of the user C, the second connection unit 32 acquires the data of the user C in accordance with the policy, and the first connection unit 31 stores the data of the user C in the database 140 for B coordination provided in the first data distribution platform 100 and provides the data of the user C to the user B in accordance with the policy in the first data distribution platform 100. In a case where the user D uses the data of the user A, in response to a request complying with the policy from the user D to the second connection unit 32, the first connection unit 31 acquires the data of the user A from the first data distribution platform 100 in accordance with the policy, and the second connection unit 32 provides the data of the user A to the user D. This makes it possible to exchange control messages for agreeing on the policy between users of the different data distribution platforms 100 and 200, and possible for each user to use data in accordance with the agreed policy through the data distribution platforms 100 and 200 to which the user is connected.

By using the coordination provision device 30 of the present embodiment, it is no longer necessary to perform registration application to each data distribution platform, deployment of a connection system, and work such as operation for connection to a plurality of data distribution platforms which are necessary for each company to cope with individually. In addition, there will be no need for each company to write policies in different formats for each data distribution platform and convert them into different data formats. Further, there will no longer be a need to deploy a system that can manage and convert information for all users of a plurality of data distribution platforms and transmit and receive messages while converting them mutually, which has been an issue when deploying an intermediary system that connects different data distribution platforms. By using the coordination provision device 30 of the present embodiment, it is possible to allocate the minimum necessary system resources to only those users who require interconnection.

Meanwhile, the data distribution platform 100 may have the function of the coordination provision device 30, or the data distribution platform 200 may include the coordination provision device 30. In other words, the data distribution provision system of the present embodiment may be a data distribution provision system including the data distribution platform 100 and the coordination provision device 30, or may be a data distribution provision system including the data distribution platform 200 and the coordination provision device 30.

### [Coordination between similar data distribution platforms]

Next, an embodiment in which data distribution platforms 100A and 100B, and data distribution platforms 200C and 200D, which handle the same type of data, are coordinated together will be described. The data distribution platforms 100A and 100B provide data distribution by storing user data in a storage means and managing access thereto. The data distribution platforms 200C and 200D provide data distribution by guaranteeing that there is an agreement on the conditions for sharing data between users without storing user data. Meanwhile, even in a case where data distribution platforms that handle the same type of data are coordinated together, modification examples of data distribution platforms that handle different types of data described so far can be applied.

### [Example of user A using data of user B]

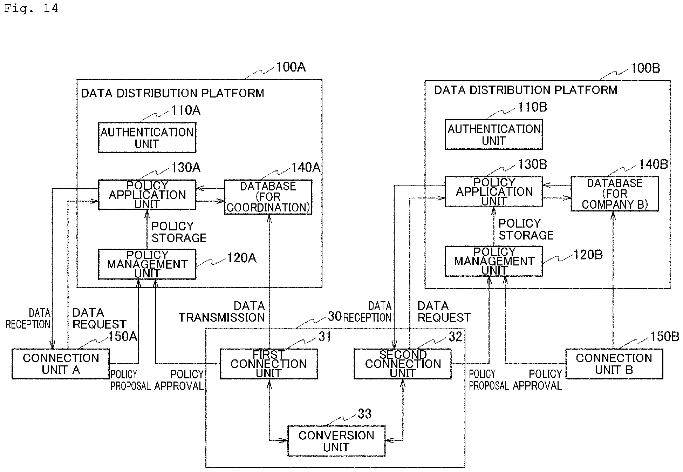

Reference will be made to Fig. 14 to describe an embodiment in which data is shared between the first data distribution platforms 100A and 100B that secure a data sharing policy by storing user data and managing access to data. Hereinafter, it is assumed that the user A is a user of the data distribution platform 100A and the user B is a user of the data distribution platform 100B, and an example in which the user A uses data of the user B will be described.

In the present embodiment, the coordination provision device 30 is provided to coordinate the data distribution platform 100A and the data distribution platform 100B, thereby realizing data sharing between the data distribution platform 100A and the data distribution platform 100B. Specifically, the coordination provision device 30 acts as a counterpart of the user A (referred to as "A coordination") in the data distribution platform 100A. In addition, the coordination provision device 30 acts as a proxy for the user A in the data distribution platform 100B. The A coordination is registered as a separate organization different from the user A on the data distribution platform 100A. In the data distribution platform 100A, a policy agreement is formed between the user A and the coordination provision device 30, and in the data distribution platform 100B, a policy agreement is formed between the user B and the coordination provision device 30. The coordination provision device 30 coordinates the policy of the data distribution platform 100A and the policy of the data distribution platform 100B to thereby convert and relay messages transmitted and received between the data distribution platform 100A and the data distribution platform 100B.

The authentication units 110A and 110B, the policy management units 120A and 120B, and the policy application units 130A and 130B of the data distribution platforms 100A and 100B are similar to the authentication unit 110, the policy management unit 120, and the policy application unit 130 of the data distribution platform 100 in Fig. 1, and thus redundant description will be omitted here. The database 140A dedicated to A coordination is located at the data distribution platform 100A. A folder path dedicated to A coordination may be located. The database 140B dedicated to B that holds the data of the user B is located at the data distribution platform 100B. The user A is connected to the data distribution platform 100A using the connection unit 150A, and the user B is connected to the data distribution platform 100B using the connection unit 150B.

The coordination provision device 30 in Fig. 14 includes the first connection unit 31, the second connection unit 32, and the conversion unit 33.

The first connection unit 31 authenticates the authentication unit 110A so as to be connectable to the data distribution platform 100A, and acts as A coordination that is a counterpart of the user A in the data distribution platform 100A.

When a policy is agreed upon between the user A and the user B, the first connection unit 31 acquires a policy proposal message of the user A from the policy management unit 120A, and transmits the policy proposal message of the user A to the second connection unit 32 through the conversion unit 33. The first connection unit 31 transmits a policy approval message received from the second connection unit 32 through the conversion unit 33 to the data distribution platform 100A. The first connection unit 31 transmits the policy approval message to the data distribution platform 100A, whereby a policy agreement is formed between the user A and the first connection unit 31 (A coordination) in the data distribution platform 100A.

The first connection unit 31 stores the data received from the user B in the database 140A.

The second connection unit 32 authenticates the authentication unit 110B so as to be connectable to the data distribution platform 100B, and acts as a proxy for the user A who is a counterpart of the user B in the data distribution platform 100B.

The second connection unit 32 transmits the policy proposal message of the user A received through the conversion unit 33 to the data distribution platform 100B. The user B uses the connection unit 150B to transmit the policy approval message to the data distribution platform 100B, so that a policy agreement is formed between the user B and the second connection unit 32 in the data distribution platform 100B.

The second connection unit 32 acquires the data of the user B from the data distribution platform 100B in accordance with the policy, and transmits the acquired data to the first connection unit 31 through the conversion unit 33.

The conversion unit 33 converts messages transmitted and received between the data distribution platform 100A and the data distribution platform 100B. For example, in a case where the industry in which the data distribution platform 100A is used differs from the industry in which the data distribution platform 100B is used and terms differ from each other between the industries, the terms are converted to match the transfer destination.

When the policy proposal message of the user A received from the first connection unit 31 is transmitted to the second connection unit 32, the conversion unit 33 converts the policy from the format of the data distribution platform 100A to the format of the data distribution platform 100B. The conversion unit 33 converts the policy so that the policy agreed upon between the user A who uses the data and the first connection unit 31 is the same as or more restrictive than the policy agreed upon between the user B who provides the data and the second connection unit 32. The conversion method and conversion content are the same as those of the conversion unit 33 in Fig. 3, and thus a description thereof will be omitted here.

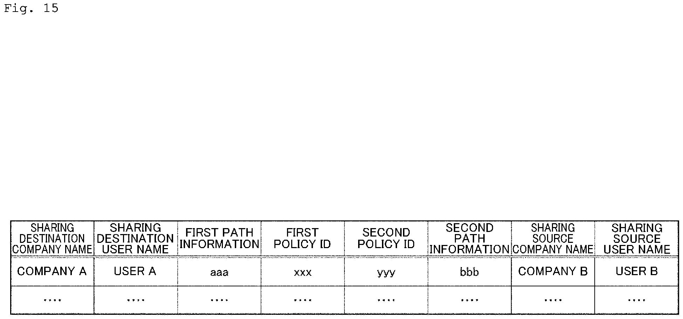

The conversion unit 33 is provided with a correspondence table that associates the policy agreed upon in the data distribution platform 100A with the policy agreed upon in the data distribution platform 100B, and coordinates the policy of the data distribution platform 100A and the policy of the data distribution platform 100B. Fig. 15 shows an example of the policy correspondence table. The policy correspondence table shown in the drawing includes a sharing destination company name, a sharing destination user name, first path information, a first policy ID, a second policy ID, second path information, a sharing source company name, and a sharing source user name. The sharing destination company name and the sharing destination user name are the company name and user name of the data user. The sharing source company name and the sharing source user name are the company name and user name of the data provider. The first path information is information indicating a location where data is stored on the data distribution platform 100A. The first policy ID is an ID for specifying a policy agreed upon in the data distribution platform 100A. The second path information is information indicating a location where data is stored on the data distribution platform 100B. The second policy ID is an ID for specifying a policy agreed upon in the data distribution platform 100B.

The data acquired from the data distribution platform 100B in accordance with the policy of the second policy ID is stored in the data distribution platform 100A in accordance with the policy of the first policy ID corresponding to the second policy ID. For example, in a case where the data of the user B is acquired from the data distribution platform 100B, the conversion unit 33 searches the correspondence table for the policy, converts the data transmission message so as to store the data in the location indicated by the first path information of the searched record, and transfers the data transmission message to the first connection unit 31.

In a case where the data owned by the user B is periodically added or updated, the conversion unit 33 may periodically request the data from the second connection unit 32 and transmit the acquired data to the first connection unit 31.

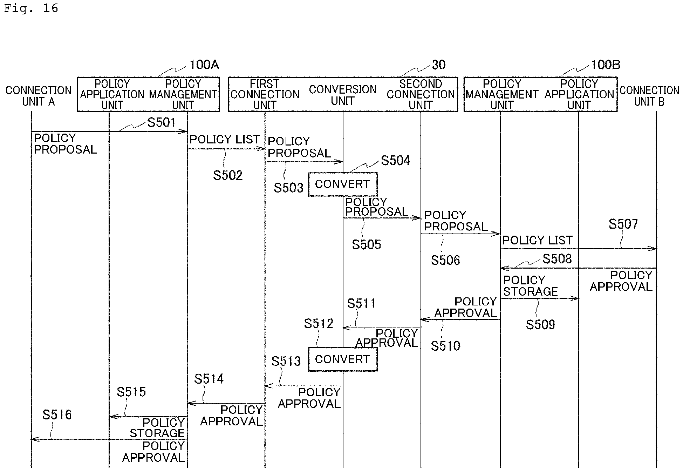

Next, an example of processing of forming a policy agreement will be described with reference to the sequence diagram of Fig. 16. The connection unit 150A of the user A has been authenticated by the data distribution platform 100A. The connection unit 150B of the user B has been authenticated by the data distribution platform 100B.

In step S501, the connection unit 150A transmits a policy proposal message for requesting sharing of the data owned by the user B to the policy management unit 120A.

The first connection unit 31 acquires a policy list from the policy management unit 120A in step S502, extracts the policy proposal message for requesting sharing of the data owned by the user B from information contained in the policy list in step S503, and transmits the extracted policy proposal message to the conversion unit 33.

The conversion unit 33 converts the received policy proposal message from the format of the data distribution platform 100A to the format of the data distribution platform 100B in step S504, and transmits the converted policy proposal message to the second connection unit 32 in step S505.

In step S506, the second connection unit 32 transmits the policy proposal message to the policy management unit 120B. The policy management unit 120B holds the policy proposal message.

In step S507, the connection unit 150B acquires a policy list from the policy management unit 120B. The user B confirms the policy proposal for the user B included in the policy list.

When the user B approves the policy, in step S508, the connection unit 150B transmits a policy approval message to the policy management unit 120B.

When the policy approval message is received, the policy management unit 120B stores the approved policy in the policy application unit 130B in step S509, and transmits the policy approval message to the second connection unit 32 in step S510.

In step S511, the second connection unit 32 transmits the policy approval message to the conversion unit 33.

The conversion unit 33 converts the received policy approval message from the format of the data distribution platform 100B to the format of the data distribution platform 100A in step S512, and transmits the converted policy approval message to the first connection unit 31 in step S513.

In step S514, the first connection unit 31 transmits the policy approval message to the policy management unit 120A.

When the policy approval message is received, the policy management unit 120A stores the approved policy in the policy application unit 130A in step S515, and notifies the connection unit 150A that the policy has been approved in step S516.

When the policies are agreed upon in the data distribution platform 100A and the data distribution platform 100B, the conversion unit 33 records the correspondence between the policy agreed upon in the data distribution platform 100A and the policy agreed upon in the data distribution platform 100B in the policy correspondence table.

Meanwhile, since the user A and the first connection unit 31 (A coordination) are substantially the same person, the processes of steps S501 to S503 may not be performed, and the user A may operate the coordination provision device 30, input a policy to the coordination provision device 30, and set a policy for sharing data between the user A and A coordination. As a process equivalent to the process of forming a policy agreement in steps S513 to S515, the first connection unit 31 on the data provider side sets a policy for sharing data of A coordination with the user A in the data distribution platform 100A. When the user A inputs a policy to the coordination provision device 30, in step S504, the conversion unit 33 converts the input policy into the format of the data distribution platform 100B and transmits it to the data distribution platform 100B. That is, when the user A inputs a policy to the coordination provision device 30, the coordination provision device 30 sets a policy between the user A and A coordination in the data distribution platform 100A, and transmits a policy proposal message corresponding to the input policy to the data distribution platform 100B.

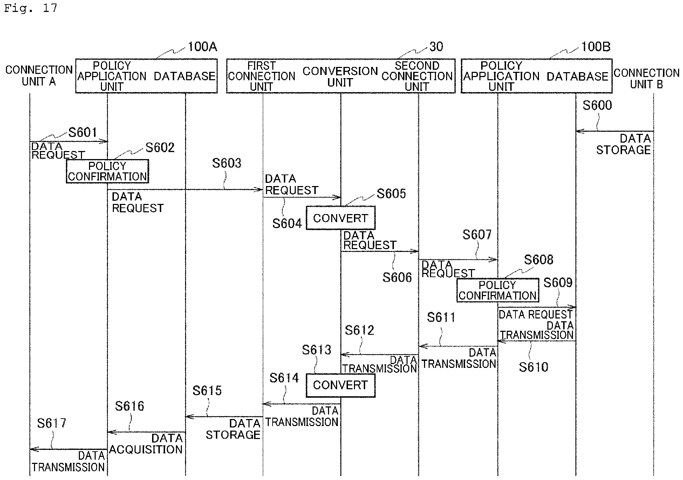

Next, an example of processing in which the user A uses the data owned by the user B will be described with reference to the sequence diagram of Fig. 17.

In step S600, the connection unit 150B transmits the data of the user B to the data distribution platform 100B. The data of the user B is stored in the database 140B.

In step S601, the connection unit 150A transmits a data request message for the data of the user B to the policy application unit 130A. The data request message may be a data request message for data managed by the A coordination.

In step S602, the policy application unit 130A confirms whether the content of the data request message complies with the policy. Specifically, the policy application unit 130A searches for a policy that matches the content of the data request message from among a plurality of policies it holds. In a case where there is a matching policy, the policy application unit 130A confirms whether the user A is included in the entity that will receive data sharing described in the policy, and further confirms whether the use content of the data included in the data request message falls within the scope of the usage permissions for the data.

In a case where the content of the data request message complies with the policy, the policy application unit 130A transmits the data request message to the first connection unit 31 in step S603. In a case where the requested data is stored in the database 140A, the policy application unit 130 may acquire the data from the database 140A.

In step S604, the first connection unit 31 transmits the data request message to the conversion unit 33.

In step S605, the conversion unit 33 converts the data request message from the format of the data distribution platform 100A to the format of the data distribution platform 100B. For example, the conversion unit 33 refers to the policy correspondence table and converts the path information on the data distribution platform 100A requested in the data request message into path information on the data distribution platform 100B.

In step S606, the conversion unit 33 transmits the converted data request message to the second connection unit 32.

In step S607, the second connection unit 32 transmits the data request message to the policy application unit 130B.

In step S608, the policy application unit 130B confirms whether the content of the data request message complies with the policy.

In a case where the content of the data request message complies with the policy, the policy application unit 130B requests the data from the database 140B in step S609, and acquires the data from the database 140B in step S610.

In step S611, the policy application unit 130B transmits the data to the second connection unit 32, and in step S612, the second connection unit 32 transmits the data to the conversion unit 33.

In step S613, the conversion unit 33 converts the data from the format of the data distribution platform 100B to the format of the data distribution platform 100A. For example, the conversion unit 33 refers to the policy correspondence table and sets the storage destination of the data transmission message in the path information on the data distribution platform 100A.

In step S614, the conversion unit 33 transmits the data to the first connection unit 31.

In step S615, the first connection unit 31 stores the data in the database 140A. The first connection unit 31 may notify the policy application unit 130A that the data has been stored. Alternatively, the first connection unit 31 may transmit the data to the policy application unit 130A as a response to the data request message in step S203.

The policy application unit 130A acquires the data from the database 140 in step S616, and transmits the data to the connection unit 150A in step S217.

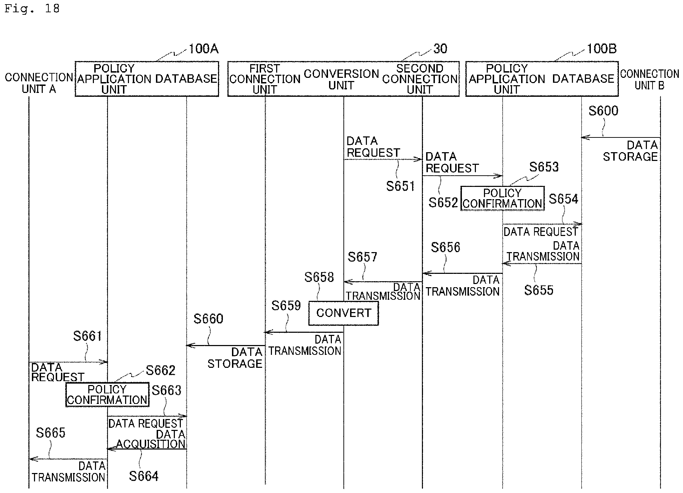

Next, an example of another processing in which the user A uses the data owned by the user B will be described with reference to the sequence diagram of Fig. 18. In the processing of Fig. 17, data has been acquired from the user B in response to a request from the user A, whereas in the processing of Fig. 18, after a policy agreement, the data owned by the user B is stored in advance in the database 140A of the data distribution platform 100A.

In step S600, the connection unit 150B transmits the data of the user B to the data distribution platform 100B. The data of the user B is stored in the database 140B.

In step S651, the conversion unit 33 transmits a data request message for the data of the user B to the second connection unit 32. For example, for the data of the user B which is periodically added, the conversion unit 33 transmits the data request message in accordance with the timing of data addition.

In step S652, the second connection unit 32 transmits the data request message to the policy application unit 130B.

In step S653, the policy application unit 130B confirms whether the content of the data request message complies with the policy.

In a case where the content of the data request message complies with the policy, the policy application unit 130B requests the data from the database 140B in step S654, and acquires the data from the database 140B in step S655.

In step S656, the policy application unit 130B transmits the data to the second connection unit 32, and in step S657, the second connection unit 32 transmits the data to the conversion unit 33.

In step S658, the conversion unit 33 converts the data from the format of the data distribution platform 100B to the format of the data distribution platform 100A.

In step S659, the conversion unit 33 transmits the data to the first connection unit 31.

In step S660, the first connection unit 31 stores the data in the database 140A.

Through the above processing, the data of the user B agreed upon in the policy is stored in the database 140A of the data distribution platform 100A, and thus the user A can use the data of the user B in accordance with the policy.

In a case where the user A uses the data of the user B, in step S661, the connection unit 150A transmits a data request message for the data of the user B owned by the A coordination to the policy application unit 130A.

In step S662, the policy application unit 130A confirms whether the content of the data request message complies with the policy.

In a case where the content of the data request message complies with the policy, the policy application unit 130A requests the data from the database 140A in step S663, acquires the data from the database 140A in step S664, and transmits the data to the connection unit 150A in step S665.

As described above, the coordination provision device 30 of the present embodiment is the coordination provision device 30 for the user A of the data distribution platform 100A to use the data of the user B of the data distribution platform 100B, and includes the first connection unit 31 that forms a policy agreement with the user A in the data distribution platform 100A, the second connection unit 32 that forms a policy agreement with the user B in the data distribution platform 100B, and the conversion unit 33 that converts messages transmitted and received between the first connection unit 31 and the second connection unit 32 into the format of the data distribution platform which is a transmission destination and transfers the messages. This makes it possible to form a policy agreement between the user A and the user B and to share data between the data distribution platforms 100A and 100B.

### [Example of the user C using data of user D]

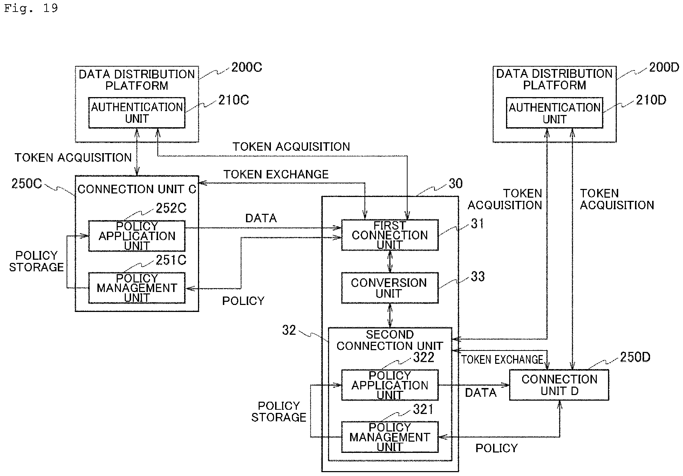

Reference will be made to Fig. 19 to describe an embodiment in which data is shared between the second data distribution platforms 200C and 200D that secure a data sharing policy by guaranteeing an agreement between users without storing user data. Hereinafter, it is assumed that the user C is a user of the data distribution platform 200C and the user D is a user of the data distribution platform 200D, and an example in which the user D uses data of the user C will be described.

In the present embodiment, the coordination provision device 30 is provided to coordinate the data distribution platform 200C and the data distribution platform 200D, thereby realizing data sharing between the data distribution platform 200C and the data distribution platform 200D. Specifically, the coordination provision device 30 acts as another organization (C coordination) of the user C in the data distribution platform 200C, and acts as the user C in the data distribution platform 200D. The coordination provision device 30 may act as the user D in the data distribution platform 200C, and act as another organization (D coordination) of the user D in the data distribution platform 200D. In the data distribution platform 200C, a policy agreement is formed between the user C and the coordination provision device 30, and a policy agreement is formed between the user D and the coordination provision device 30 in the data distribution platform 200D. The coordination provision device 30 coordinates the policy of the data distribution platform 200C and the policy of the data distribution platform 200D to thereby convert and relay messages transmitted and received between the data distribution platform 200C and the data distribution platform 200D.

The authentication units 210C and 210D of the data distribution platforms 200C and 200D are similar to the authentication unit 210 of the data distribution platform 200 in Fig. 2, and thus redundant description will be omitted here. Each of the users C and D communicates with other users connected to the data distribution platform 200C with the user C using the connection unit 250C. The user D uses the connection unit 250D to communicate with other users connected to the data distribution platform 200D. Meanwhile, in the example of Fig. 19, the connection unit 250C and the connection unit 250D acquire tokens from separate data distribution platforms 200C and 200D, and thus cannot communicate directly with each other.

The coordination provision device 30 in Fig. 19 includes the first connection unit 31, the second connection unit 32, and the conversion unit 33.

In order to be communicable with each user of the data distribution platform 200C, the first connection unit 31 presents a certificate owned by the first connection unit 31 to the authentication unit 210C of the data distribution platform 200C for authentication, and requests a token to acquire a token. The first connection unit 31 and the connection unit 250C of the user C exchange tokens and confirm each other's legitimacy, thereby enabling communication with the connection unit 250C.

The first connection unit 31 transmits the policy proposal message of the user D received through the conversion unit 33 to the connection unit 250C, and transmits the policy approval message of the user C received from the connection unit 250C to the second connection unit 32 through the conversion unit 33. When the user C approves the policy proposal message at the connection unit 250C, a policy agreement is formed between the user C and the first connection unit 31 in the data distribution platform 200C.

The first connection unit 31 requests data from the connection unit 250C in accordance with the policy, and transmits the data received from the connection unit 250C to the second connection unit 32 through the conversion unit 33.

In order to be communicable with each user of the data distribution platform 200D, the second connection unit 32 presents a certificate owned by the second connection unit 32 to the authentication unit 210D of the data distribution platform 200D for authentication, and requests a token to acquire a token. The second connection unit 32 and the connection unit 250D of the user D exchange tokens and confirm each other's legitimacy, thereby enabling communication with the connection unit 250D.

The second connection unit 32 includes the policy management unit 321 and the policy application unit 322. The policy management unit 321 forms a policy agreement with the user D as the user C in the data distribution platform 200D. The policy application unit 322 transmits the data of the user C in accordance with the policy agreed upon in the data distribution platform 200D. The data of the user C is acquired from the data distribution platform 200C.

The policy management unit 321 receives and holds the policy proposal message of the user D. The second connection unit 32 transmits the policy proposal message of the user D held by the policy management unit 321 to the data distribution platform 200C through the conversion unit 33 and the first connection unit 31. When the policy proposal of the user D is approved, the policy management unit 321 stores the approved policy in the policy application unit 322.

The policy application unit 322 receives a data request message from the user D, and determines whether the content of the data request message complies with the policy held by the policy application unit 322. In a case where the data request message complies with the policy, the policy application unit 322 transmits the data request message to the conversion unit 33, acquires the data from the data distribution platform 200C, and transmits the data to the connection unit 250D.

The conversion unit 33 converts messages transmitted and received between the data distribution platform 200C and the data distribution platform 200D.

When the policy proposal message of the user D received from the second connection unit 32 is transmitted to the first connection unit 31, the conversion unit 33 converts the policy from the format of the data distribution platform 200D to the format of the data distribution platform 200C. The conversion unit 33 converts the policy so that the policy agreed upon between the user D who uses the data and the second connection unit 32 is the same as or more restrictive than the policy agreed upon between the user C who provides the data and the first connection unit 31. The conversion method and conversion content are the same as those of the conversion unit 33 in Fig. 3, and thus a description thereof will be omitted here.

The conversion unit 33 is provided with a correspondence table that associates the policy agreed upon in the data distribution platform 200C with the policy agreed upon in the data distribution platform 200D, and coordinates the policy of the data distribution platform 200C and the policy of the data distribution platform 200D. For example, the connection unit 250D requests data from the second connection unit 32 in accordance with the policy agreed upon in the data distribution platform 200D. The conversion unit 33 refers to the correspondence table, converts the data request to the second connection unit 32 into a data request to the connection unit 250C in accordance with the policy agreed upon in the data distribution platform 200C corresponding to the policy agreed upon in the data distribution platform 200D, and transmits it to the first connection unit 31.

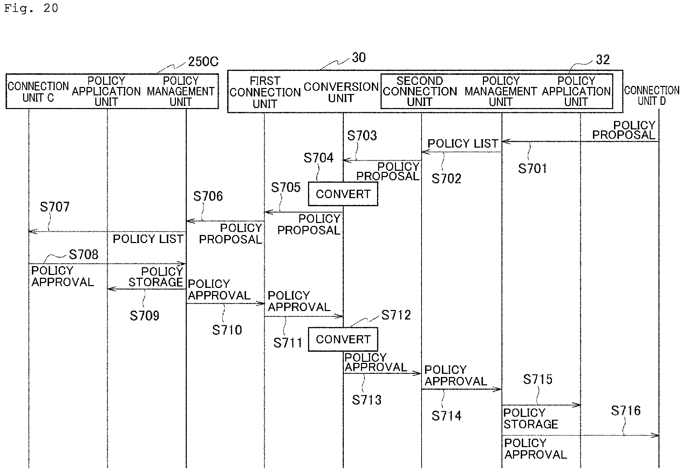

Next, an example of processing of forming a policy agreement will be described with reference to the sequence diagram of Fig. 20. The connection unit 250C of the user C and the first connection unit 31 have already authenticated each other by exchanging tokens acquired from the data distribution platform 200C. The connection unit 250D of the user D and the second connection unit 32 have already authenticated each other by exchanging tokens acquired from the data distribution platform 200D.

In step S701, the connection unit 250D transmits a policy proposal message for requesting sharing of the data owned by the user C to the policy management unit 321.

The second connection unit 32 acquires a policy list from the policy management unit 321 in step S702, extracts the policy proposal message for requesting sharing of the data owned by the user C from the information contained in the policy list in step S703, and transmits the extracted policy proposal message to the conversion unit 33.

The conversion unit 33 converts the received policy proposal message from the format of the data distribution platform 200D to the format of the data distribution platform 200C in step S704, and transmits the converted policy proposal message to the first connection unit 31 in step S705.

In step S706, the first connection unit 31 transmits the policy proposal message to the policy management unit 251C. The policy management unit 251C holds the policy proposal message.

In step S707, the connection unit 250C acquires a policy list from the policy management unit 251C. The user C confirms the policy proposal for the user C included in the policy list.

When the user C approves the policy, in step S708, the connection unit 250C transmits a policy approval message to the policy management unit 251C.

When the policy approval message is received, the policy management unit 251C stores the approved policy in the policy application unit 252C in step S709, and transmits the policy approval message to the first connection unit 31 in step S710.

In step S711, the first connection unit 31 transmits the policy approval message to the conversion unit 33.

The conversion unit 33 converts the received policy approval message from the format of the data distribution platform 200C to the format of the data distribution platform 200D in step S712, and transmits the converted policy approval message to the second connection unit 32 in step S713.

In step S714, the second connection unit 32 transmits the policy approval message to the policy management unit 321.

When the policy approval message is received, the policy management unit 321 stores the approved policy in the policy application unit 322 in step S715, and notifies the connection unit 250D that the policy has been approved in step S716.

When the policies are agreed upon in the data distribution platform 200C and the data distribution platform 200D, the conversion unit 33 records the correspondence between the policy agreed upon in the data distribution platform 200C and the policy agreed upon in the data distribution platform 200D in a policy correspondence table.

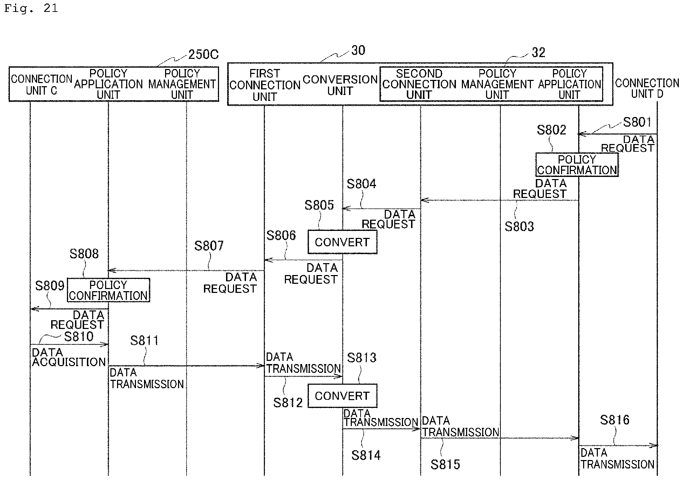

Next, an example of processing in which the user D uses the data owned by the user C will be described with reference to the sequence diagram of Fig. 21.

In step S801, the connection unit 250D transmits a data request message for the data of the user C to the policy application unit 322.

In step S802, the policy application unit 322 confirms whether the content of the data request message complies with the policy.

In a case where the content of the data request message complies with the policy, the policy application unit 322 transmits the data request message to the second connection unit 32 in step S803.

In step S804, the second connection unit 32 transmits the data request message to the conversion unit 33.

In step S805, the conversion unit 33 converts the data request message from the format of the data distribution platform 200D to the format of the data distribution platform 200C. For example, the conversion unit 33 refers to the policy correspondence table and converts a request to the policy application unit 322 of the second connection unit 32 into a request to the policy application unit 252C of the connection unit 250C.

In step S806, the conversion unit 33 transmits the converted data request message to the first connection unit 31.

In step S807, the first connection unit 31 transmits the data request to the policy application unit 252C.

In step S808, the policy application unit 252C confirms whether the content of the data request message complies with the policy.

In a case where the content of the data request message complies with the policy, the policy application unit 252C requests the data from the connection unit 250C in step S809, and acquires the data from the connection unit 250C in step S810.

In step S811, the policy application unit 252C transmits the data to the first connection unit 31, and in step S812, the first connection unit 31 transmits the data to the conversion unit 33.

In step S813, the conversion unit 33 converts the data from the format of the data distribution platform 200C to the format of the data distribution platform 200D.

In step S814, the conversion unit 33 transmits the data to the second connection unit 32.

In step S815, the second connection unit 32 transmits the data to the policy application unit 322, and in step S816, the policy application unit 322 transmits the data to the connection unit 250D.

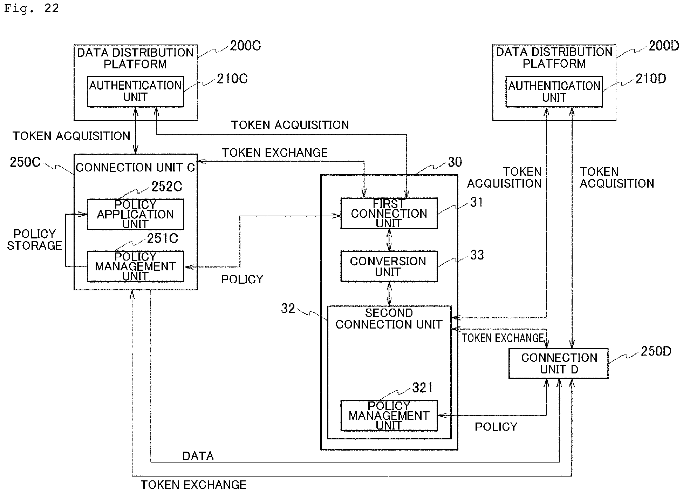

Another example in which data is shared between the second data distribution platforms 200C and 200D will be described with reference to Fig. 22. The example shown in Fig. 22 differs from the example shown in Fig. 19 in that after a policy agreement is formed, the connection unit 250C and the connection unit 250D directly transmit and receive data.

The coordination provision device 30 in Fig. 22 does not hold a policy because it does not relay data, and the second connection unit 32 does not include the policy application unit 322. Meanwhile, the second connection unit 32 includes the policy management unit 321 in order to accept a policy proposal from the connection unit 250D and respond with its approval.

When a policy agreement is formed between the user C and the user D, as described in Fig. 20, the connection unit 250C and the connection unit 250D transmit and receive messages through the coordination provision device 30 to form a policy agreement. The formed policy is stored in the policy application unit 252C of the connection unit 250C of a data provider.

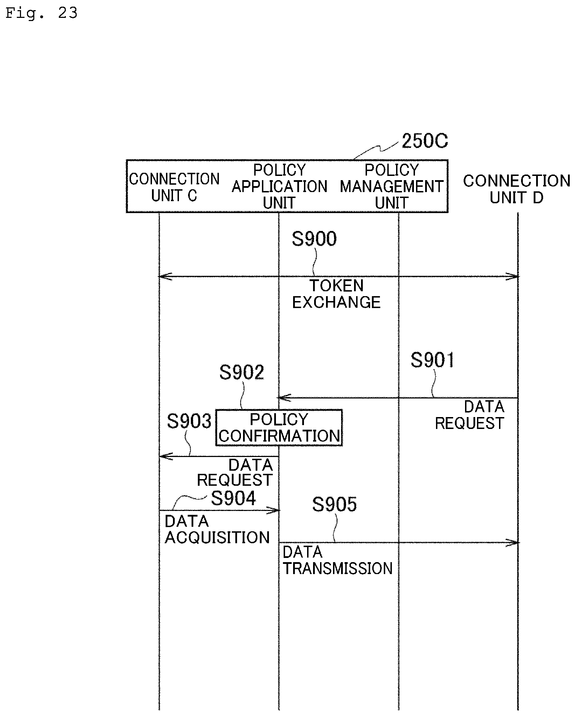

When a policy agreement is formed, as shown in the sequence diagram of Fig. 23, tokens are exchanged between the connection unit 250C and the connection unit 250D in step S900. The authentication unit 210C of the data distribution platform 200C and the authentication unit 210D of the data distribution platform 200D share information for verifying the token with each other, and share the information with the connection units 250C and 250D. Therefore, the token issued by the authentication unit 210C can also be verified by the connection unit 250D, and the token issued by the authentication unit 210D can also be verified by the connection unit 250C.

When the user D uses the data of the user C, in step S901, the connection unit 250D transmits a data request message for the data of the user C to the policy application unit 252C of the connection unit 250C.

In step S902, the policy application unit 252C determines whether the content of the data request message complies with the policy held by the policy application unit 252C.

In a case where the data request message complies with the policy, the policy application unit 252C requests data from the connection unit 250C in step S903.

In step S904, the connection unit 250C acquires the data from the data storage location, and transmits the data to the policy application unit 252C. The data may be transmitted inclusive in the data transmission message.

In step S905, the policy application unit 252C transmits the data to the connection unit 250D.

As described above, the coordination provision device 30 of the present embodiment is the coordination provision device 30 for the user C of the data distribution platform 200C to use data of the user D of the data distribution platform 200D, and includes the first connection unit 31 that forms a policy agreement with the user C in the data distribution platform 200C, the second connection unit 32 that form a policy agreement with the user D in the data distribution platform 200D, and the conversion unit 33 that converts messages transmitted and received between the first connection unit 31 and the second connection unit 32 into the format of the data distribution platform which is a transmission destination and transfer the messages. This makes it possible to form a policy agreement between the user C and the user D and to share data between the data distribution platforms 200C and 200D.

Meanwhile, in the above, the coordination provision device 30 has been described as a separate device from the data distribution platforms 100 and 200, but any of the data distribution platforms 100 and 200 coordinated with each other may have the function of the coordination provision device. For example, the data distribution platforms 100 and 100A of Figs. 3, 8, and 14 may include the first connection unit 31, the second connection unit 32, and the conversion unit 33.

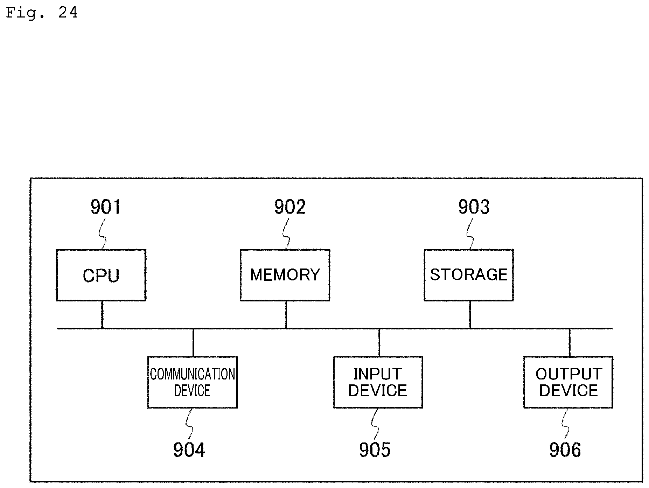

The coordination provision device 30 described above can use, for example, a general-purpose computer system including a central processing unit (CPU) 901, a memory 902, a storage 903, a communication device 904, an input device 905, and an output device 906 as shown in Fig. 24. In this computer system, the CPU 901 executes a predetermined program loaded onto the memory 902, thereby allowing the coordination provision device 30 to be realized. This program can be recorded on a computer-readable non-transitory recording medium such as a magnetic disc, an optical disc, or a semiconductor memory, or can be distributed through a network. The above-described computer system may be used as each unit of the data distribution platforms 100 and 200.

The following supplements will be further disclosed regarding the above embodiments.

### (Supplement 1)

A coordination provision device for coordinating a first data distribution platform and second data distribution platform to provide data sharing between a first user of the first data distribution platform and a second user of the second data distribution platform, the coordination provision device comprising:
a first connection unit that forms an agreement on a first sharing condition with the first user in the first data distribution platform; and
a second connection unit that forms an agreement on a second sharing condition with the second user in the second data distribution platform,
wherein the first sharing condition and the second sharing condition are agreed upon to form an agreement on sharing conditions through the coordination provision device between the first user and the second user, and
sharing conditions agreed upon between a user who uses data and the coordination provision device are the same as or more restricted than sharing conditions agreed upon between a user who provides data and the coordination provision device.

### (Supplement 2)

A data distribution provision device for a first data distribution platform in a data distribution provision system that coordinates a first data distribution platform and a second data distribution platform using a coordination provision device to provide data sharing between a first user of the first data distribution platform and a second user of the second data distribution platform, the device comprising: a management unit that manages sharing conditions between the first user and the coordination provision device; and a storage means for the coordination provision device, wherein an agreement on a first sharing condition is formed between the first user and the coordination provision device in the first data distribution platform, an agreement on a second sharing condition is formed between the second user and the coordination provision device in the second data distribution platform, and an agreement on sharing conditions through the coordination provision device is formed between the first user and the second user by the first sharing condition and the second sharing condition being agreed upon, and
sharing conditions agreed upon between a user who uses data and the coordination provision device are the same as or more restricted than sharing conditions agreed upon between a user who provides data and the coordination provision device.

### (Supplement 3)

A data distribution provision device for a second data distribution platform in a data distribution provision system that coordinates a first data distribution platform and a second data distribution platform using a coordination provision device to provide data sharing between a first user of the first data distribution platform and a second user of the second data distribution platform, the data distribution provision device comprising:
an authentication unit that authenticates the coordination provision device and grants the coordination provision device a token for indicating legitimacy of the coordination provision device with respect to the second user,
wherein an agreement on a first sharing condition is formed between the first user and the coordination provision device in the first data distribution platform, an agreement on a second sharing condition is formed between the second user and the coordination provision device in the second data distribution platform, and an agreement on sharing conditions through the coordination provision device is formed between the first user and the second user by the first sharing condition and the second sharing condition being agreed upon, and
sharing conditions agreed upon between a user who uses data and the coordination provision device are the same as or more restricted than sharing conditions agreed upon between a user who provides data and the coordination provision device.

### (Supplement 4)

A coordination provision method of coordinating a first data distribution platform and a second data distribution platform to provide data sharing between a first user of the first data distribution platform and a second user of the second data distribution platform, the method comprising:
using a coordination provision device,
a step of forming an agreement on a first sharing condition with the first user in the first data distribution platform; and
a step of forming an agreement on a second sharing condition with the second user in the second data distribution platform, wherein the first sharing condition and the second sharing condition are agreed upon to form an agreement on sharing conditions through the coordination provision device between the first user and the second user, and
sharing conditions agreed upon between a user who uses data and the coordination provision device are the same as or more restricted than sharing conditions agreed upon between a user who provides data and the coordination provision device.

### (Supplement 5)

A data distribution provision system that coordinates a first data distribution platform and a second data distribution platform to provide data sharing between a first user of the first data distribution platform and a second user of the second data distribution platform, the data distribution provision system comprising:
the first data distribution platform;
a first connection unit that forms an agreement on a first sharing condition with the first user in the first data distribution platform; and
a second connection unit that forms an agreement on a second sharing condition with the second user in the second data distribution platform,
wherein the first sharing condition and the second sharing condition are agreed upon to form an agreement on sharing conditions through the coordination provision device between the first user and the second user, and
sharing conditions agreed upon between a user who uses data and the coordination provision device are the same as or more restricted than sharing conditions agreed upon between a user who provides data and the coordination provision device.

### [Reference Signs List]

100, 100A, 100B Data distribution platform
110, 110A, 110B Authentication unit
120, 120A, 120B Policy management unit
130, 130A, 130B Policy application unit
140, 140A, 140B Database
150A, 150B Connection unit
200, 200C, 200D Data distribution platform
210, 210C, 210D Authentication unit
250C, 250D Connection unit
251C Policy Management unit
252C Policy application unit
30 Coordination provision device
31 First connection unit
32 Second connection unit
321 Policy management unit
322 Policy application unit
33 Conversion unit
331 First conversion unit
332 Second conversion unit
333 General-purpose policy management unit

## Claims

1. A coordination provision device for coordinating a first data distribution platform and second data distribution platform to provide data sharing between a first user of the first data distribution platform and a second user of the second data distribution platform, the device comprising:
a first connection unit that forms an agreement on a first sharing condition with the first user in the first data distribution platform; and
a second connection unit that forms an agreement on a second sharing condition with the second user in the second data distribution platform,
wherein the first sharing condition and the second sharing condition are agreed upon to form an agreement on sharing conditions through the coordination provision device between the first user and the second user, and
sharing conditions agreed upon between a user who uses data and the coordination provision device are the same as or more restricted than sharing conditions agreed upon between a user who provides data and the coordination provision device.

2. The coordination provision device according to claim 1, wherein the first sharing condition and the second sharing condition are associated with each other, a request for data complying with the first sharing condition is converted into a request for data complying with the second sharing condition, and a request for data complying with the second sharing condition is converted into a request for data complying with the first sharing condition.

3. The coordination provision device according to claim 1 or 2, wherein the first data distribution platform is a data distribution platform that includes a storage means and
provides data distribution by storing user data in the storage means and managing access thereto,
the second data distribution platform is a data distribution platform that provides data distribution by guaranteeing that there is an agreement on conditions for sharing data between users without storing user data,
the first data distribution platform includes a storage means for the coordination provision device, and
in a case where the first user is provided with use to data of the second user,
the second connection unit acquires the data of the second user under the second sharing condition, and
the first connection unit stores the data of the second user acquired by the second connection unit in the storage means for the coordination provision device so that the first user is able to use the data of the second user under the first sharing condition in the first data distribution platform.

4. The coordination provision device according to claim 3, wherein the data of the second user is periodically acquired under the second sharing condition, and the data of the second user is stored in the storage means for the coordination provision device.

5. The coordination provision device according to claim 3, wherein conditions for sharing data are input from the first user, the first sharing condition is set in the first data distribution platform in accordance with the sharing conditions, and a message for forming an agreement on the second sharing condition with the second user in accordance with the sharing conditions is transmitted to the second user.

6. The coordination provision device according to claim 1 or 2, wherein the first data distribution platform is a data distribution platform that includes a storage means and
provides data distribution by storing user data in the storage means and managing access thereto,
the second data distribution platform is a data distribution platform that provides data distribution by guaranteeing that there is an agreement on conditions for sharing data between users without storing user data, and
in a case where the second user is provided with use to data of the first user,
the first connection unit acquires the data of the first user stored in the storage means under the first sharing condition, and
the second connection unit provides the data of the first user acquired by the first connection unit to the second user under the second sharing condition.

7. The coordination provision device according to claim 1 or 2, wherein each of the first data distribution platform and the second data distribution platform is a data distribution platform that includes a storage means and
provides data distribution by storing user data in the storage means and managing access thereto,
the first data distribution platform includes a storage means for a coordination provision device, and
in a case where the first user is provided with use to data of the second user,
the second connection unit acquires the data of the second user stored in the storage means provided in the second data distribution platform under the second sharing condition, and
the first connection unit stores the data of the second user acquired by the second connection unit in the storage means for the coordination provision device so that the first user is able to use the data of the second user under the first sharing condition in the first data distribution platform.

8. The coordination provision device according to claim 1 or 2, wherein each of the first data distribution platform and the second data distribution platform is a data distribution platform that provides data distribution by guaranteeing that there is an agreement on conditions for sharing data between users without storing user data, and in a case where the first user is provided with use to data of the second user,
the second connection unit acquires the data of the second user under the second sharing condition, and
the first connection unit provides the data of the second user acquired by the second connection unit to the first user under the first sharing condition.

9. The coordination provision device according to claim 8, wherein after the first sharing condition and the second sharing condition are agreed upon, data is directly transmitted and received between the first user and the second user.

10. A data distribution provision device for a first data distribution platform in a data distribution provision system that coordinates a first data distribution platform and a second data distribution platform using a coordination provision device to provide data sharing between a first user of the first data distribution platform and a second user of the second data distribution platform, the data distribution provision device comprising:
a management unit that manages sharing conditions between the first user and the coordination provision device; and
a storage means for the coordination provision device,
wherein an agreement on a first sharing condition is formed between the first user and the coordination provision device in the first data distribution platform, an agreement on a second sharing condition is formed between the second user and
the coordination provision device in the second data distribution platform, and an agreement on sharing conditions through the coordination provision device is formed between the first user and the second user by the first sharing condition and the second sharing condition being agreed upon, and
sharing conditions agreed upon between a user who uses data and the coordination provision device are the same as or more restricted than sharing conditions agreed upon between a user who provides data and the coordination provision device.

11. The data distribution provision device according to claim 10, wherein the first data distribution platform is a data distribution platform that includes a storage means and provides data distribution by storing user data in the storage means and managing access thereto,
the second data distribution platform is a data distribution platform that provides data distribution by guaranteeing that there is an agreement on conditions for sharing data between users without storing user data, and
in a case where the first user is provided with use to data of the second user, the data of the second user acquired under the second sharing condition is stored in the storage means for the coordination provision device so that the first user is able to use the data of the second user under the first sharing condition in the first data distribution platform.

12. The data distribution provision device according to claim 10, wherein each of the first data distribution platform and the second data distribution platform is a data distribution platform that includes a storage means and provides data distribution by storing user data in the storage means and managing access thereto, and
in a case where the first user is provided with use to data of the second user, the data of the second user acquired under the second sharing condition is stored in a storage means for the coordination provision device so that the first user is able to use the data of the second user under the first sharing condition in the first data distribution platform.

13. A data distribution provision device for a second data distribution platform in a data distribution provision system that coordinates a first data distribution platform and a second data distribution platform using a coordination provision device to provide data sharing between a first user of the first data distribution platform and a second user of the second data distribution platform, the data distribution provision device comprising:
an authentication unit that authenticates the coordination provision device and grants the coordination provision device a token for indicating legitimacy of the coordination provision device with respect to the second user,
wherein an agreement on a first sharing condition is formed between the first user and the coordination provision device in the first data distribution platform, an agreement on a second sharing condition is formed between the second user and the coordination provision device in the second data distribution platform, and an agreement on sharing conditions through the coordination provision device is formed between the first user and the second user by the first sharing condition and the second sharing condition being agreed upon, and
sharing conditions agreed upon between a user who uses data and the coordination provision device are the same as or more restricted than sharing conditions agreed upon between a user who provides data and the coordination provision device.

14. The data distribution provision device according to claim 13, wherein the first data distribution platform is a data distribution platform that includes a storage means and provides data distribution by storing user data in the storage means and managing access thereto,
the second data distribution platform is a data distribution platform that provides data distribution by guaranteeing that there is an agreement on conditions for sharing data between users without storing user data, and
in a case where the second user is provided with use to data of the first user,
the coordination provision device acquires the data of the first user stored in the storage means under the first sharing condition, and
the coordination provision device provides the data of the first user to the second user under the second sharing condition.

15. The data distribution provision device according to claim 13, wherein each of the first data distribution platform and the second data distribution platform is a data distribution platform that provides data distribution by guaranteeing that there is an agreement on conditions for sharing data between users without storing user data, and in a case where the second user is provided with use to data of the first user,
the coordination provision device acquires the data of the first user under the first sharing condition, and
the coordination provision device provides the data of the first user to the second user under the second sharing condition.

16. A coordination provision method of coordinating a first data distribution platform and a second data distribution platform to provide data sharing between a first user of the first data distribution platform and a second user of the second data distribution platform, the method comprising:
using a coordination provision device,
a step of forming an agreement on a first sharing condition with the first user in the first data distribution platform; and
a step of forming an agreement on a second sharing condition with the second user in the second data distribution platform, wherein the first sharing condition and the second sharing condition are agreed upon to form an agreement on sharing conditions through the coordination provision device between the first user and the second user, and
sharing conditions agreed upon between a user who uses data and the coordination provision device are the same as or more restricted than sharing conditions agreed upon between a user who provides data and the coordination provision device.
